(19) Europäisches Patentamt
European Patent Office
Office européen des brevets

(11) EP 0 861 867 B1

(12) EUROPÄISCHE PATENTSCHRIFT

(45) Veröffentlichungstag und Bekanntmachung des Hinweises auf die Patenterteilung:
**30.06.2004 Patentblatt 2004/27**

(51) Int Cl.$^7$: **C08J 3/16**, C08L 101/00, C04B 24/24
// (C08L101/00, 33:02, 33:04)

(21) Anmeldenummer: **98103317.8**

(22) Anmeldetag: **25.02.1998**

(54) **Verwendung von Copolymerisaten aus ethylenisch ungesättigten Carbonsäuren und deren Hydroxyalkylestern als Trocknungshilfsmittel**

The use of copolymers of ethylenically unsaturated carboxylic acids and their hydroxyalkyl esters as drying assistant

L'utilisation de copolymères d'acides carboxyliques insaturés et leur hydroxyalcoylesters en tant qu'agent assistant le séchage

(84) Benannte Vertragsstaaten:
**DE FR GB IT**

(30) Priorität: **26.02.1997 DE 19707746**

(43) Veröffentlichungstag der Anmeldung:
**02.09.1998 Patentblatt 1998/36**

(73) Patentinhaber: **BASF AKTIENGESELLSCHAFT
67056 Ludwigshafen (DE)**

(72) Erfinder:
- **Pakusch, Joachim
67346 Speyer (DE)**
- **Angel, Maximilian
67105 Schifferstadt (DE)**
- **Claassen, Peter
67063 Ludwigshafen (DE)**
- **Dragon, Andree
67346 Speyer (DE)**

(74) Vertreter: **Kinzebach, Werner, Dr. et al
Patentanwälte,
Reitstötter, Kinzebach & Partner,
Ludwigsplatz 4
67059 Ludwigshafen (DE)**

(56) Entgegenhaltungen:
**EP-A- 0 467 103**
**EP-A- 0 629 650**
**DE-A- 2 360 174**

- **DATABASE WPI Section Ch, Week 7719 Derwent Publications Ltd., London, GB; Class A14, AN 77-33338Y XP002103439 & JP 51 131538 A (KANSAI PAINT CO LTD) , 16. November 1976**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 861 867 B1

## Beschreibung

Die vorliegende Erfindung betrifft die Verwendung von Copolymerisaten oder deren Salzen, die in einpolymerisierter Form ethylenisch ungesättigte $C_3$-$C_6$-Carbonsäuren (Monomere A), Hydroxyalkylester ethylenisch ungesättigter $C_3$-$C_6$-Carbonsäuren (Monomere B) und gegebenenfalls weitere Monomere C enthalten, als Trocknungshilfsmittel, insbesondere bei der Sprühtrocknung wässriger Polymerisatdispersionen. Weiterhin betrifft die vorliegende Erfindung ein Verfahren zur Herstellung von in wässrigem Medium redispergierbaren Polymerisatpulvern sowie die redispergierbaren Polymerisatpulver und ihre Verwendung.

wässrige Polymerisatdispersionen finden in vielen Bereichen Verwendung, beispielsweise als Bindemittel, insbesondere für Kunstharzputze, hochpigmentierte Innenfarben, Beschichtungsmassen, sowie als Klebstoffe oder Modifikatoren für mineralische Baustoffe. Als mineralische Baustoffe werden hier und im folgenden Baustoffe bezeichnet, die im wesentlichen ein mineralisches Bindemittel wie Kalk, Gips und/oder insbesondere Zement und Zuschläge wie Sand oder Steine enthalten und die durch Anrühren mit Wasser in ihre gebrauchsfertige Form (mineralische Baustoffzubereitung) überführt werden, wobei diese mit der Zeit an der Luft oder auch unter Wasser sich steinartig verfestigt. Demzufolge können wässrige Polymerisatdispersionen zum Zwecke der Modifizierung mineralischer Baustoffe erst am Gebrauchsort zugesetzt werden. Im Unterschied hierzu können Polymerisatpulver zusammen mit dem mineralischen Bindemittel formuliert werden, was die Zubereitung der mineralischen Baustoffe vereinfacht. Zudem bieten Polymerisatpulver gegenüber den Dispersionen den Vorteil, daß der Transport des Dispergiermediums "Wasser" vom Herstellungsort zum Gebrauchsort entfällt.

Die für die oben genannten Zwecke erforderlichen, in Wasser redispergierbaren Polymerisatpulver sind prinzipiell durch Trocknung der entsprechenden wässrigen Polymerisatdispersionen zugänglich. Beispiele für solche Trocknungsverfahren sind die Gefriertrocknung und die Sprühtrocknung. Bei der Sprühtrocknung, die sich insbesondere bei der Herstellung größerer Pulvermengen als zweckmäßig erweist, wird die wässrige Polymerisatdispersion in einem Warmluftstrom versprüht und entwässert, wobei die Trockenluft und die versprühte Dispersion vorzugsweise im Gleichstrom durch den Trockner geführt werden (vgl. z. B. EP-A 262 326 oder EP-A 407 889).

Das erhaltene Polymerisatpulver hat jedoch den Nachteil, daß seine Redispergierbarkeit in wäßrigem Medium im allgemeinen nicht voll zu befriedigen vermag, weil die bei der Redispergierung resultierende Polymerisatteilchen-Durchmesserverteilung in der Regel von derjenigen in der wäßrigen Ausgangsdispersion verschieden ist. Der Grund dafür liegt darin, daß wäßrige Polymerisatdispersionen im Unterschied zu Polymerisatlösungen keine thermodynamisch stabilen Systeme bilden. Vielmehr versucht das System, die Grenzfläche Polymerisat/Dispergiermedium durch Vereinigung von kleinen Primärteilchen zu größeren Sekundärteilchen (Stippen, Koagulat) zu verkleinern. Dies kann im Zustand der dispersen Verteilung im wäßrigem Medium durch Zusatz von Dispergiermitteln, wie Emulgatoren und Schutzkolloiden auch für längere Zeit verhindert werden. Bei der Trocknung wäßriger Polymerisatdispersionen reicht nun aber die Wirkung der Dispergiermittel häufig nicht mehr aus und es kommt in bestimmtem Umfang zu irreversibler Sekundärteilchenbildung. Das heißt, die Sekundärteilchen bleiben bei der Redispergierung erhalten und mindern die anwendungstechnischen Eigenschaften der im Rahmen der Redispergierung erhältlichen wäßrigen Polymerisatdispersion.

Um die Sekundärteilchenbildung beim Trocknen zu verhindern oder zumindest zu reduzieren, ist es seit längerem bekannt, sogenannte Trocknungshilfsmittel einzusetzen. Diese werden vielfach als Sprühhilfsmittel bezeichnet, da die Sprühtrocknung die Bildung irreversibel agglomerierter Sekundärteilchen besonders fördert. Dieser Effekt ist um so ausgeprägter, je niedriger die Glasübergangstemperatur (und damit die Erweichungstemperatur oder die Mindestfilmbildetemperatur) der Polymerteilchen ist, insbesondere dann, wenn sie unterhalb der Trocknungstemperatur liegt. Gleichzeitig mindern Trocknungshilfsmittel in der Regel die Ausbildung von an der Trocknerwand haftenbleibendem Polymerbelag und bewirken so eine Erhöhung der Pulverausbeute.

Übliche Trocknungshilfsmittel sind beispielsweise Kondensationsprodukte aus sulfonatgruppenhaltigen aromatischen Kohlenwasserstoffen und Formaldehyd (siehe z. B. DE-A 24 45813, EP-A 784 449, EP-A 407 889). Derartige Kondensationsprodukte sind zwar wirksame Sprühhilfsmittel, sie besitzen jedoch den Nachteil, daß sie insbesondere in alkalischem Medium, beispielsweise in alkalischem Mörtel, infolge von Sauerstoffeinwirkung zu Verfärbungen neigen.

Die EP-A 467 103 offenbart als Sprühhilfsmittel ganz oder teilweise neutralisierte, wasserlösliche Copolymerisate, die neben hydrophoben Monomeren 50 bis 80 Mol % Carboxylgruppen aufweisende Monomere einpolymerisiert enthalten.

Die EP-A-629 650 beschreibt die Verwendung von Polymerisaten, die durch radikalische Polymerisation von Monomerengemischen aus 15 bis 80 Gew.-% eines Monomeren der allgemeinen Formel

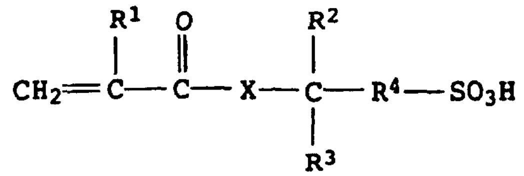

worin $R^1$, $R^2$ und $R^3$ unabhängig voneinander für H oder $C_1$-$C_3$-Alkyl stehen, $R^4$ für $C_1$-$C_5$-Alkylen steht und X für O oder NH steht, und 20 bis 85 Gew.-% eines radikalisch copolymerisierbaren Monomers in wäßrigem Medium erhältlich sind, als Sprühhilfsmittel bei der Sprühtrocknung von wäßrigen Polymerisatdispersionen.

Die JP 51 131538 A betrifft sprühbare, wärmehärtende Beschichtungen, umfassend u.a. eine durch Emulsionspolymerisation unter Verwendung eines wasserlöslichen Copolymers als Emulgator erhaltene wässrige Polymerdispersion, wobei das als Emulgator eingesetzte Copolymer durch Copolymerisation von 5 bis 60 Gew.-% Hydroxyalkylacrylat und/oder Hydroxyalkylmethacrylat, 5 bis 20 Gew.-% Acrylsäure und/oder Methacrylsäure, sowie weiterer monoethylenisch ungesättigter Monomere erhalten wurde.

Die JP-A 59-162161 beschreibt in Wasser lösliche Copolymerisate, die in einpolymerisierter Form 10 bis 90 Mol.-%, bezogen auf die Gesamtzahl der Monomere, wenigsten einen Hydroxyalkylester einer ethylenisch ungesättigten Monocarbonsäure und 10 bis 90 Mol.-% wenigstens eine ethylenisch ungesättigte Mono- oder Dicarbonsäure enthalten. Die Verwendung der Copolymerisate als Trocknungshilfsmittel wird nicht vorgeschlagen.

Bei Verwendung von Trocknungshilfsmitteln ist prinzipiell zu beachten, daß diese die Eigenschaften der Polymerisatpulver und damit auch die Eigenschaften von Zubereitungen, die derartige Polymerisatpulver enthalten, beeinflussen können. So ist beispielsweise bekannt, daß die Wasserfestigkeit von Kunstharzputzen auf der Basis sprühhilfsmittelfreier Polymerisatpulver höher ist als die von Kunstharzputzen auf der Basis von Polymerisatpulvern, welche mittels Vinylpyrrolidon/Vinylacetat-Copolymerisaten der EP-A 784 449 oder Polyvinylalkohol der DE-A 221 4410 als Trocknungshilfsmittel hergestellt wurden.

Bei Verwendung der mit Hilfe von Trocknungsmitteln getrockneten Polymerisatpulver in mineralischen Baustoffen ist es oftmals von Nachteil, daß die Trocknungshilfsmittel eine Verzögerung des Abbindevorgangs (geringe Biege- und Druckfestigkeit) und unter Umständen eine Verringerung der Endhärte bewirken. Umgekehrt ist die Dauer der Verarbeitbarkeit von Polymerisat-modifizierten mineralischen Baustoffzubereitungen, die die zuvor genannten Nachteile nicht aufweisen, oftmals nicht ausreichend lang. Zudem ist eine Verbesserung der Haftung von polymerisatmodifizierten Baustoffzubereitungen auf kritischen Untergründen, beispielsweise stark saugenden Untergründen oder hydrophoben Oberflächen, z. B. Hartschaumstoffe auf Polyurethan- oder Polystyrolbasis, Kunststofffolien, wünschenswert.

Die Aufgabe der vorliegenden Erfindung besteht somit darin, Trocknungshilfsmittel für die Trocknung wässriger Polymerisatdispersionen bereit zu stellen, die die Nachteile des Standes der Technik nicht aufweisen und insbesondere bei Verwendung in mineralischen Baustoffen den Härteanstieg nicht verzögern. Gleichzeitig sollen sie die Verarbeitungsdauer und die Fließfähigkeit der mineralischen Baustoffzubereitungen verbessern. Die polymerisatmodifizierten mineralischen Baustoffe sollen zudem eine hohe Endhärte und eine gute Haftung auf kritischen Untergründen besitzen.

Diese Aufgabe konnte überraschenderweise gelöst werden durch Verwendung von Copolymerisaten auf der Basis ethylenisch ungesättigter Carbonsäuren mit 3 bis 6 C-Atomen und Hydroxyalkylestern dieser Carbonsäuren als Trocknungshilfsmittel für wässrige Polymerisatdispersionen.

Dementsprechend betrifft die vorliegende Erfindung die Verwendung von Copolymerisaten oder deren Salzen, die in einpolymerisierter Form, jeweils bezogen auf die Gesamtzahl der einpolymerisierten Monomere, 20 bis 95 Mol % wenigstens einer ethylenisch ungesättigen Carbonsäure mit 3 bis 6 C-Atomen (Monomere A), 5 bis 80 Mol % wenigstens eines Hydroxylalkylesters einer ethylenisch ungesättigten Carbonsäure mit 3 bis 6 C-Atomen (Monomere B) und bis zu 10 Mol % weitere Monomere C enthalten, als Hilfsmittel bei der Trocknung wässriger Polymerisatdispersionen.

Die vorliegende Erfindung betrifft weiterhin ein Verfahren zur Herstellung pulverförmiger Polymerisate, in Anwesenheit der erfindungsgemäßen Trocknungshilfsmittel.

Die vorliegende Erfindung betrifft auch die in Gegenwart von den oben genannten Trocknungshilfsmitteln hergestellten Polymerisatpulvern sowie die Verwendung dieser Polymerisatpulver als Bindemittel in Anstrichmassen, Lacken, Klebstoffen, Beschichtungsmassen und Kunstharzputzen sowie als Modifikatoren in mineralischen Baustoffen.

Die ethylenisch ungesättigten Carbonsäuren mit 3 bis 6 C-Atomen ($C_3$-$C_6$-Carbonsäuren; Monomere A) umfassen Acrylsäure, Methacrylsäure, Crotonsäure, Isocrotonsäure, Vinylessigsäure, 2-Ethylacrylsäure und 2-Propylacrylsäure. Bei den Hydroxyalkylestern der genannten ethylenisch ungesättigten $C_3$-$C_6$-Carbonsäuren (Monomere B) handelt es sich vorzugsweise um Hydroxyalkylester, worin der Hydroxyalkylrest 2 bis 10 Kohlenstoffatome aufweist und gegebenenfalls durch ein oder mehrere, nicht benachbarte Sauerstoffatome unterbrochen ist, z. B. 2-Hydroxyethyl, 2- oder 3-Hydroxypropyl, 2-, 3- oder 4-Hydroxybutyl, 5-Hydroxy-3-oxapentyl, 6-Hydroxy-4-oxahexyl, 8-Hydroxy-3,6-dioxaoctyl, 11-Hydroxy-3,6,9-trioxaundecyl und 14-Hydroxy-3,6,9,12-tetraoxatetradecyl.

Bevorzugt werden Copolymerisate verwendet, die als Monomere A Acrylsäure und/oder Methacrylsäure einpolymerisiert enthalten. Die bevorzugten Polymerisate können in untergeordnetem Maße, insbesonders bis zu 20 Mol-% bezogen auf die Gesamtmenge an Monomer A, auch andere $C_3$-$C_6$-Carbonsäuren einpolymerisiert enthalten. Besonders bevorzugt sind Polymerisate, worin alleiniges Monomer A Acrylsäure ist. Als Monomere B kommen vorzugsweise die Hydroxyalkylester der Acrylsäure und/oder der Methacrylsäure in Frage. Hierunter besonders bevorzugt sind 2-Hydroxyethylacrylat, 2-Hydroxyethylmethacrylat, 2-Hydroxypropylacrylat, 2-Hydroxypropylmethacrylat, 1-Hydroxypropyl-2-acrylat, 1-Hydroxypropyl-2-methacrylat sowie technische Gemische aus 1- und 2-Hydroxypropyl(meth)acrylat, wie sie bei der Umsetzung von Acrylsäure oder Methacrylsäure mit Propylenoxid anfallen, 3-Hydroxypropylacrylat und/oder 3-Hydroxypropylmethacrylat. Ein Teil der bevorzugten Monomere B, insbesondere nicht mehr als 20 Mol-% bezogen auf die Gesamtmenge an Monomer B, kann durch andere Hydroxyalkylester ersetzt werden. Darüber hinaus kann man Polymerisate verwenden, die weitere Monomere C einpolymerisiert enthalten.

Monomere C umfassen monoethylenisch ungesättigte Monomere wie $C_2$-$C_6$-Olefine, z. B. Ethylen oder Propylen, vinylaromatische Monomere wie Styrol, $\alpha$-Methylstyrol, o-Chlorstyrol oder Vinyltoluole, Ester aus Vinylalkohol und 1 bis 20 C-Atomen aufweisenden linearen oder verzweigten, aliphatischen Monocarbonsäuren wie Vinylacetat, Vinylpropionat, Vinyl-n-butyrat, Vinyllaurat und Vinylstearat, Ester monoethylenisch ungesättigter $C_3$-$C_6$-Carbonsäuren oder $C_4$-$C_8$-Dicarbonsäuren mit $C_1$-$C_{12}$-Alkanolen wie beispielsweise Ester der Acrylsäure, Methacrylsäure, Maleinsäure und/oder Fumarsäure mit Methanol, Ethanol, n-Butanol, Isobutanol, tert.-Butanol und 2-Ethylhexanol, weiterhin Acrylnitril und/oder Methacrylnitril sowie konjugierte Diene wie 1,3-Butadien oder Isopren. Weiterhin kommen als Monomere C die Amide ethylenisch ungesättigter $C_3$-$C_6$-Carbonsäuren oder $C_4$-$C_8$-Dicarbonsäuren, wie Acrylamid, Methacrylamid, Maleinsäurehalbamid, N-Vinyllactame wie N-Vinylpyrrolidon und ethylenisch ungesättigte Sulfonsäuren bzw. deren Salze wie Vinylsulfonsäure, 2-Acrylamido-2-methylpropansulfonsäure in Frage. Als Monomere C können auch ethylenisch ungesättigte $C_4$-$C_8$-Dicarbonsäuren, wie Maleinsäure, Fumarsäure, Itaconsäure oder Citraconsäure, deren Anhydride wie z. B. Maleinsäureanhydrid oder deren Halbester mit $C_1$-$C_{12}$-Alkanolen, z. B. Methylmaleinsäurehalbester, n-Butylmaleinsäurehalbester verwendet werden. Als Monomere C enthalten die erfindungsgemäß zur Anwendung kommenden Copolymerisate insbesondere die vorgenannten Sulfonsäuren bzw. deren Salze, insbesondere deren Natriumsalze, einpolymerisiert.

In einer bevorzugten Ausführungsform enthalten die Copolymerisate 30 bis 70 Mol %, insbesondere 40,5 bis 49,5 Mol % Monomere A, 30 bis 70 Mol % und insbesondere 50,5 bis 59,5 Mol % Monomere B und bis zu 9, insbesondere bis zu 5 Mol % Monomere C einpolymerisiert. Ganz besonders bevorzugte Monomerkombinationen sind: Acrylsäure und Hydroxyethylacrylat; Acrylsäure und Hydroxyethylmethacrylat; Acrylsäure und Hydroxypropylacrylat; Acrylsäure, Hydroxyethylmethacrylat und 2-Acrylamido-2-methylpropansulfonsäure; sowie Acrylsäure, Hydroxypropylacrylat und 2-Acrylamido-2-methylpropansulfonsäure.

Die erfindungsgemäßen Copolymerisate weisen vorzugsweise ein zahlenmittleres Molekulargewicht $M_n$ > 5.000, insbesondere $M_n$ > 8.000, und ganz besonders bevorzugt $M_n$ > 10.000 auf. Vorzugsweise ist $M_n$ < 15.000. Das gewichtsmittlere Molekulargewicht $M_w$ liegt vorzugsweise im Bereich von 20.000 bis 70.000. Bevorzugt werden Copolymerisate, deren Uneinheitlichkeit U (= $M_w/M_n$)im Bereich von 3 bis 10 und insbesondere im Bereich von 3 bis 5 liegt.

Bezugsbasis für die vorgenannten Angaben sind die Molekulargewichte der Na-Salze der Copolymerisate, wie sie durch Gelpermeations-Chromatographie (GPC) bestimmt wurden. Die GPC erfolgte unter Anwendung von vier hintereinander geschalteten Säulen:

1. Innendurchmesser : 7,8 mm, Länge: 30 cm, Trennmaterial: Toso Haas TSK PW-XL 5000,
2. Innendurchmesser: 7,8 mm, Länge: 30 cm, Trennmaterial: Waters Ultrahydrogel 1000,
3. Innendurchmesser: 7,8 mm, Länge: 30 cm, Trennmaterial: Waters Ultrahydrogel 500,
4. Innendurchmesser: 7,8 mm, Länge: 30 cm, Trennmaterial: Waters Ultrahydrogel 500.

Aufgegeben werden 200 µl einer 0,1 gew.-%igen wässrigen Lösung des mit Natriumhydroxid neutralisierten Copolymerisats I. Die Säulen werden auf 35 °C temperiert. Als Elutionsmittel wird eine wässrige 0,08 molare Lösung eines TRIS-Puffer (pH 7) verwendet, dem 0,15 mol/l NaCl bzw. 0,01 mol/1 $NaN_3$ zugesetzt werden. Die Durchflußgeschwindigkeit des Eluiermittels wird zu 0,5 ml/min gewählt. Vor der Probenaufgabe wird die Probe durch ein Filter der Marke Sartorius Minisart RC 25 (Porenweite 0,20 µm) filtriert. Als Detektor wird ein Differentialrefraktometer ERC 7510

der Firma ERMA verwendet. Die Kalibrierung erfolgt nach R. Brüssau et al. in Tenside, Surf.Det. 28 (1991) 596-406. Relative Molekulargewichte < 700 werden bei der vorgenannten Bestimmungsmethode nicht berücksichtigt.

Die Herstellung der erfindungsgemäß zur Anwendung kommenden Copolymerisate ist im Prinzip bekannt und kann nach den üblichen Verfahren für die Herstellung wasserlöslicher Copolymerisate aus wasserlöslichen, ethylenisch ungesättigten Monomeren erfolgen. Sie erfolgt mit Vorteil durch radikalische Lösungspolymerisation der Monomere A, B und gegebenenfalls C. Bevorzugt wird diese in polaren Lösungsmitteln, z. B. in $C_1$-$C_3$-Alkoholen wie Methanol, Ethanol, n- oder iso-Propanol, Wasser oder Alkohol-Wasser-Mischungen durchgeführt. Bevorzugt wird Wasser, das nicht mehr als 20 Vol.-% Alkohol enthält, und besonders bevorzugt Wasser als alleiniges Lösungsmittel.

Die Monomere A können in Form der freien Säure oder vorzugsweise in Form ihrer Salze, beispielsweise ihrer Alkalimetallsalze, Erdalkalimetallsalze und/oder Ammoniumsalze verwendet werden. Auch ist es möglich, die Polymerisation in Gegenwart einer Base durchzuführen, so daß die Monomere A teilweise oder vollständig neutralisiert im Polymerisationsansatz vorliegen. Besonders bevorzugt werden Monomere A in Form einer wässrigen Lösung verwendet, die mit einem Alkali- oder Erdalkalihydroxid, insbesondere mit wässrigem Natrium- oder Calciumhydroxid, neutralisiert wurde.

Vorzugsweise erfolgt die Herstellung der erfindungsgemäßen Copolymerisate nach einem zulaufverfahren, d. h. die Hauptmenge der Monomere, insbesondere die Gesamtmenge der Monomere, wird kontinuierlich dem Reaktionsansatz zugeführt. Ganz besonders bevorzugt werden die Monomere A, B und C als wässrige Lösung, insbesondere als neutralisierte wässrige Lösung, zudosiert.

Hinsichtlich der Initiatoren für die Polymerisationsreaktion bestehen keine Einschränkungen. Geeignete Initiatoren umfassen vorzugsweise organische und insbesondere anorganische Peroxide wie Natriumperoxodisulfat. Die Initiatormenge liegt vorzugsweise im Bereich von 0,5 bis 10 Gew.-% und bevorzugt 2 bis 8 Gew.-%, bezogen auf die zu polymerisierenden Monomere. Der Initiator kann im Polymerisationsgefäß vorgelegt oder nach Maßgabe seines Verbrauchs kontinuierlich, vorzugsweise als wässrige Lösung, zum Polymerisationsansatz zugegeben werden. Besonders bevorzugt wird ein Teil des Initiators vorgelegt und die verbleibende Initiatormenge zudosiert.

Zur Einstellung des gewünschten Molekulargewichts der Copolymerisate kann man der Polymerisationsreaktion in bekannter Weise das Molekulargewicht regelnde Substanzen zusetzen. Hierbei handelt es sich vorzugsweise um Verbindungen, die eine Thiolgruppe enthalten und, sofern die Polymerisation in Wasser oder einem wässrig alkoholischen Reaktionsmedium durchgeführt wird, bevorzugt um solche Verbindungen, die wasserlöslich sind. Beispiele hierfür sind Ethylthioglykolat, 2-Ethylhexylthioglykolat, Cystein, 2-Mercaptoethanol, 3-Mercaptopropanol, 3-Mercaptoglycerin, Mercaptoessigsäure, 3-Mercaptopropionsäure. Die Menge an Regler hängt naturgemäß von der Art der Monomere und des Initiators ab. Sie kann vom Fachmann anhand einfacher Versuche leicht ermittelt werden. Vorzugsweise verwendet man bis zu 1,0 Gew.-% und insbesondere nicht mehr als 0,5 Gew.-% Molekulargewichtsregler, bezogen auf die zu polymerisierenden Monomere A, B und C.

Die Polymerisationstemperatur hängt naturgemäß von dem gewählten Initiatorsystem ab und kann im Bereich von 30 bis 100 °C und insbesondere 40 bis 90 °C liegen. Der Polymerisationsreaktion kann sich zur Vervollständigung des Umsatzes eine Nachpolymerisation anschließen, die durch Zugabe von weiterem Initiator und/oder Temperaturerhöhung bewirkt wird. Die eigentliche Polymerisationsdauer (Monomerzulauf) liegt im Bereich von 0,5 bis 6 Stunden, vorzugsweise 1 bis 5 Stunden. Die gesamte Polymerisationsdauer, insbesondere einschließlich der Nachpolymerisationsphase, liegt im Bereich von 1,5 bis 10 Stunden, vorzugsweise 2,5 bis 8 Stunden.

Bei der zu trocknenden Polymerisatdispersion kann es sich um eine Primärdispersion handeln, d. h. um eine Polymerisatdispersion, die nach der Methode der radikalischen, wäßrigen Emulsionspolymerisation unmittelbar erhalten wurde. Es kann sich auch um eine Sekundärdispersion handeln, d. h. ein durch Lösungspolymerisation erhaltenes Polymerisat wird nachträglich in eine wäßrige Polymerdispersion überführt.

Besonders vorteilhaft sind die erfindungsgemäßen Copolymerisate zur Trocknung von Polymerisatdispersionen, bei denen das Polymerisat eine Glasübergangstemperatur (DSC, midpoint temperature, ASTM D 3418-82) ≤65 °C, vorzugsweise ≤50 °C, besonders bevorzugt ≤30 °C und ganz besonders bevorzugt ≤20 °C aufweist. Im allgemeinen ist die Glasübergangstemperatur der Polymerisate ≥ -50 °C, vorzugsweise ≥-25 °C und insbesondere ≥-5 °C.

Dabei ist es oft hilfreich, die Glasübergangstemperatur Tg des dispergierten Polymerisats abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g{}^1} + \frac{X^2}{T_g{}^2} + \ldots\ldots \frac{X^n}{T_g{}^n}$$

wobei $X^1$, $X^2$, ..., $X^n$ die Massenbrüche 1, 2, ..., n und $T_g{}^1$, $T_g{}^2$, ..., $T_g{}^n$ die Glasübergangstemperaturen der jeweils nur aus einem der Monomeren 1, 2, ..., n aufgebauten Polymeren in Grad Kelvin bedeuten. Letztere sind z.B. aus Ullmann's

Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

Vorzugsweise handelt es sich um Polymerisate, die aufgebaut sind aus:

80 bis 100 Gew.-% wenigstens eines Monomers a, das ausgewählt ist unter $C_2$-$C_6$-Olefinen; vinylaromatischen Verbindungen; Estern aus ethylenisch ungesättigten $C_3$-$C_6$-Carbonsäuren oder $C_4$-$C_8$-Dicarbonsäuren und $C_1$-$C_{12}$-Alkanolen, vorzugsweise $C_1$-$C_8$-Alkanolen, oder $C_5$-$C_{10}$-Cycloalkanolen; Vinyl-, Allyl- oder Methallylestern von aliphatischen $C_1$-$C_{20}$-Carbonsäuren und konjugierten Dienen,

und 0 bis 20 Gew.-% wenigstens eines sonstigen Monomers b, das wenigstens eine ethylenisch ungesättigte Gruppe aufweist.

Hierbei beziehen sich die Ausdrücke $C_n$-$C_m$ auf die im Rahmen der Erfindung mögliche Anzahl der Kohlenstoffe einer jeweiligen Verbindungsklasse. Alkylgruppen können linear oder verzweigt sein. $C_n$-$C_m$-Alkylaryl steht für Arylgruppen die einen $C_n$-$C_m$-Alkylrest tragen.

Beispiele für $C_2$-$C_6$-Olefine sind insbesondere Ethylen, Propen und Isobuten. Beispiele für vinylaromatische Verbindungen sind Styrol, $\alpha$-Methylstyrol oder Vinyltoluole, wie o-Vinyltoluol.

Bei den Estern der ethylenisch ungesättigten $C_3$-$C_6$-Monocarbonsäuren oder der $C_4$-$C_8$-Dicarbonsäuren handelt es sich insbesondere um Ester der Acrylsäure, Methacrylsäure, Maleinsäure, Fumarsäure oder Itaconsäure. Beispiele für solche Ester sind Methyl(meth)acrylat, Ethyl(meth)acrylat, n-Butyl(meth)acrylat, iso-Butyl(meth)acrylat, t-Butyl(meth)acrylat, 2-Ethylhexyl(meth)acrylat, Decyl(meth)acrylat, Dodecyl(meth)acrylat oder Cyclohexyl(meth)acrylat, 4-tert.-Butylcyclohexyl(meth)acrylat oder 3,3,5-Trimethylcyclohexyl(meth)acrylat.

Brauchbare Vinyl-, Allyl- bzw. Methallylester umfassen Vinylacetat, Vinylpropionat, Vinyl-n-butyrat, Vinyllaurat und vinylstearat, die entsprechenden Allylester und Methallylester sowie die entsprechenden Ester mit $\alpha$-verzweigten $C_{10}$-$C_{12}$-Carbonsäuren, die z. B. unter der Bezeichnung Veova® der Fa. Shell im Handel sind. Konjugierte Diene umfassen beispielsweise Butadien, Isopren oder Chloropren.

Besonders bevorzugte Monomere a sind n-Butylacrylat, 2-Ethylhexylacrylat, Methylmethacrylat, Styrol und Butadien.

Bei den Monomeren b handelt es sich vorzugsweise um die oben genannten ethylenisch ungesättigten $C_3$-$C_6$-Carbonsäuren, deren Amide, die sowohl die Mono- oder Dialkylamide als auch die Mono- oder Dialkylaminoalkylamide und deren Quaternisierungsprodukte umfassen, die Ester der ethylenisch ungesättigten Carbonsäuren mit Aminoalkoholen und deren Quaternisierungsprodukten, N-Methylolamide und Hydroxy-$C_2$-$C_6$-alkylester der vorgenannten ethylenisch ungesättigen $C_3$-$C_6$-Carbonsäuren. Brauchbar sind auch ethylenisch ungesättigte $C_4$-$C_8$-Dicarbonsäuren und deren Anhydride, z. B. Maleinsäure, Maleinsäureanhydrid, Fumarsäure, Itaconsäure, Itaconsäureanhydrid, die N-vinylderivate von cyclischen Lactamen oder von-Stickstoffheterocyclen, z. B. Vinylpyrrolidon, N-Vinylimidazole oder deren Quaternisierungsprodukte, ethylenisch ungesättigte Sulfonsäuren, z. B. die oben aufgeführten, sowie Acrylnitril und Methacrylnitril. Auch silangruppenenthaltende Monomere, wie Vinyl- und Allyltrialkoxysilane und/oder (Meth)acryloxypropyltrialkoxysilane kommen als Monomere b in Frage.

Besonders bevorzugte Monomere b sind Acrylamid, Methacrylamid, Acrylsäure, Methacrylsäure, Acrylnitril, Methacrylnitril, 2-Acrylamido-2-methylpropansulfonsäure, Vinylpyrrolidon, Hydroxyethylacrylat, Hydroxyethylmethacrylat, Hydroxypropylacrylat, Hydroxypropylmethacrylat, quarternisiertes Vinylimidazol, N,N-Dialkylaminoalkyl(meth)acrylate, N,N-Dialkylaminoalkyl(meth)acrylamide, Trialkylammoniumalkyl(meth)acrylate und Trialkylammoniumalkyl(meth)acrylamide.

Besonders bevorzugt sind die zu trocknenden Polymerisatdispersionen aufgebaut aus:

| | |
|---|---|
| 30 bis 70 Gew.-% | wenigstens einer vinylaromatischen Verbindung, insbesondere Styrol |
| 30 bis 70 Gew.-% | wenigstens einem Ester einer ethylenisch ungesättigten $C_3$-$C_6$-Monocarbonsäure mit einem $C_1$-$C_{12}$-Alkanol, insbesondere den $C_1$-$C_8$-Alkylacrylaten und $C_1$-$C_8$-Alkylmethacrylaten, und |
| 0 bis 10 Gew.-% | wenigstens einem Monomer, ausgewählt unter ethylenisch ungesättigten Carbonsäuren mit 3 bis 6 C-Atomen und deren Amiden. |

weitere bevorzugte Polymerisatdispersionen sind aus Kombinationen vinylaromatischer Monomere mit konjugierten Dienen und gegebenenfalls ethylenisch ungesättigten $C_3$-$C_6$-Carbonsäuren und/oder deren Amiden, z. B. Styrol, Butadien mit bis zu 10 Gew.-% Acrylsäure, Methacrylsäure, Acrylamid und/oder Methacrylamid; oder aus Vinylestern aliphatischer $C_1$-$C_{20}$-Carbonsäuren mit $C_1$-$C_8$-Alkylacrylaten bzw. -methacrylaten aufgebaut.

Bevorzugte Polymerisatdispersionen sind weiterhin solche, bei denen der gewichtsmittlere Durchmesser $d_w$

der dispergierten Polymerisatpartikel ≥100 nm und besonders bevorzugt ≥ 300 nm ist. Üblicherweise beträgt $d_w$ ≤2000 nm. Es ist ferner günstig, wenn die Durchmesser der dispergierten Polymerisatpartikel über einen breiten Durchmesserbereich verteilt sind.

Der $d_w$-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z. -Polymere 250 (1972) Seiten 782 bis 796, bestimmt wird. Die Ultrazentrifugenmessung liefert die integrale Massenverteilung des Teilchendurchmessers einer Probe. Hieraus läßt sich entnehmen, wieviele Gewichtsprozent der Teilchen einen Durchmesser gleich oder unter einer bestimmten Größe haben.

Ein geeignetes Maß zur Charakterisierung der Breite der Durchmesserverteilung ist der Quotient $Q = (d_{90}-d_{10})/d_{50}$, wobei $d_m$ der Durchmesser ist, der von m Gew.-% der dispergierten Polymerisatpartikel nicht überschritten wird. Vorzugsweise beträgt Q 0,2 bis 1,5. Die Herstellung von Polymerisatdispersionen mit einer derartigen Teilchenverteilungsbreite ist dem Fachmann bekannt, z.B. aus der DE-A-43 07 683.

Das Verhältnis von gewichtsmittlerem Molekulargewicht $M_w$ zu zahlenmittlerem Molekulargewicht $M_n$ der Polymerisate kann 1 bis 30 bzw. 1 bis 20 oder 1 bis 8 betragen. Das Molekulargewicht kann somit im wesentlichen einheitlich oder über eine gewisse Breite verteilt sein.

Die Herstellung der zu trocknenden Polymerisatdispersionen ist bekannt. Im allgemeinen erfolgt sie durch radikalische Polymerisation, die vorzugsweise in polaren Lösungsmitteln, insbesondere in Wasser durchgeführt wird. Zur Einstellung des gewünschten Molekulargewichtes können das Molekulargewicht regelnde Substanzen mitverwendet werden. Geeignete Molekulargewichtsregler sind z.B. Verbindungen, die eine Thiolgruppe (s. o.) und/oder eine Silangruppe aufweisen (z. B. Mercaptopropyltrimethoxysilan), sowie Allylalkohole oder Aldehyde, wie Formaldehyd, Acetaldehyd etc.

Geeignete Starter sind z.B. anorganische Peroxide, wie Natriumperoxodisulfat, Azoverbindungen oder Redox-Initiatoren (siehe hierzu Römpp, Chemielexikon 5. Aufl. S. 3811). Die Polymerisation kann je nach Monomerenzusammensetzung als Lösungs- oder vorzugsweise als radikalische, wässrige Emulsionspolymerisation erfolgen. Lösungspolymerisate, die durch Polymerisation in einem organischen Lösungsmittel erhältlich sind, werden danach vorzugsweise durch Substitution des Lösungsmittels gegen Wasser in die wässrige Polymerisatdispersion überführt (sog. Sekundärdispersionen).

Falls die Polymerisatdispersion durch Emulsionspolymerisation hergestellt wird, erfolgt dies in üblicher Weise. Im allgemeinen verwendet man ein Schutzkolloid, wie Polyvinylalkohol, Polyvinylpyrrolidon oder Cellulosederivate oder anionische und/oder nichtionische Emulgatoren, wie ethoxylierte Mono-, Di- oder Trialkylphenole, ethoxylierte Fettalkohole und Alkali- oder Ammoniumsalze von $C_8$-$C_{12}$-Alkylsulfaten, Schwefelsäurehalbestern ethoxylierter $C_{12}$-$C_{18}$-Alkanole, $C_{12}$-$C_{18}$-Alkylsulfonsäuren, $C_9$-$C_{18}$-Alkylarylsulfonsäuren und sulfonierten Alkyldiphenylethern. Die Polymerisationstemperatur liegt im allgemeinen im Bereich von 50 bis 120°C, insbesondere 70 bis 100°C.

Bei der Herstellung der zu trocknenden Polymerisatdispersion arbeitet man in der Regel nach einem Zulaufverfahren (s. o.). Wenn die Herstellung der zu trocknenden Polymerisatdispersion auf dem Wege der Emulsionspolymerisation erfolgt, kann es von Vorteil sein, wenn man in Gegenwart eines Saatlatex arbeitet. Je nach gewünschter Eigenschaft kann dieser in situ generiert werden oder als separat erzeugter Latex im Polymerisationsansatz vorgelegt oder diesem zudosiert werden. Wegen weiterer Details wird hiermit auf die DE-A 4213 967, DE-A 4213 968, EP-A 614 922, EP-A 567 811, EP-A 567 812, EP-A 567819 verwiesen und in vollem Umfang Bezug genommen. Weiterhin ist es oftmals sinnvoll, der eigentlichen Polymerisationsreaktion eine physikalische oder chemische Desodorierungsmaßnahme folgen zu lassen. Unter ersterer ist insbesondere das azeotrope Abdestillieren der nicht umgesetzten Monomere oder das Strippen der Dispersion mit Wasserdampf zu verstehen. Unter letzterer ist die Nachpolymerisation durch Zugabe von weiterem Initiator nach Beendigung der Monomerzugabe und/oder Erhöhung der Reaktionstemperatur zu verstehen.

Wie bereits oben gesagt, ist ein weiterer Gegenstand der vorliegenden Erfindung ein verfahren zur Herstellung in Wasser redispergierbarer Polymerisatpulver durch Trocknung wässriger Polymerisatdispersionen in Anwesenheit der oben beschriebenen Copolymerisate.

Die Trocknung kann in üblicher Weise, beispielsweise durch Gefriertrocknung oder vorzugsweise durch Sprühtrocknung erfolgen. Bei der Sprühtrocknung werden die zu trocknenden Polymerisatdispersion und das Trocknungshilfsmittel durch Versprühen in einem Warmluftstrom getrocknet. Die Temperatur des Warmluftstromes beträgt am Eingang des Trocknungsturmes 100 bis 200 °C, vorzugsweise 120 bis 160 °C und am Turmausgang 30 bis 90 °C und vorzugsweise 60 bis 80 °C. Die zu trocknenden Komponenten werden vorzugsweise parallel in den Warmluftstrom eingeführt. Die Versprühung kann über Ein- oder Mehrstoffdüsen oder über eine rotierende Scheibe erfolgen. Die Abscheidung der Polymerisatpulver erfolgt normalerweise unter Verwendung von Zyklonen oder Filterabscheidern.

In einer Ausführungsform der vorliegenden Erfindung werden die zu trocknende Polymerisatdispersion und das Copolymerisat separat hergestellt und anschließend getrocknet. Dabei können die wässrige Polymerisatdispersion und das Copolymerisat, vorzugsweise als wässrige Lösung, vorher gemischt oder separat der Trocknungsapparatur zudosiert werden.

In letzterem Fall wird das Trocknungshilfsmittel vorzugsweise als Lösung, insbesondere als wässrige Lösung zugeführt. In einer bevorzugten Variante dieser Ausführungsform wird das Trocknungsmittel der zu trocknenden Polymerisatdispersion vor der Trocknung, vorzugsweise in Form einer wässrig-alkoholischen und insbesondere einer wässrigen Lösung zugesetzt. Dabei kann das Copolymerisat in der Säureform oder vorzugsweise in neutralisierter Form (Salzform) zugesetzt werden. Vorzugsweise werden die Copolymerisate in Form einer wässrigen Lösung ihrer Alkali-, Erdalkali- und/oder Ammoniumsalze, insbesondere in Form ihrer Natrium- oder Calciumsalze verwendet, wie sie durch Neutralisation der Copolymerisatlösung mit einer geeigneten Base oder im Falle der Verwendung der Monomere A in Salzform bei der Herstellung der Copolymerisate anfallen.

Die zu Anwendung kommende Menge an Trocknungshilfsmitteln beträgt vorzugsweise 1 bis 40 Gew.-%, bezogen auf den Feststoffgehalt der Dispersion, vorzugsweise 2 bis 30 Gew.-% und insbesondere 10 bis 30 Gew.-%. Die auf diesem Wege erhältlichen Polymerpulver enthalten somit das als Trocknungshilfsmittel eingesetzte Copolymer, das aus den Monomeren A, B, und, sofern eingesetzt, C aufgebaut ist, sowie das Polymerisat der zu trocknenden Polymerisatdispersion, das vorzugsweise aus den Monomeren a und, sofern eingesetzt, b aufgebaut ist.

Neben den erfindungsgemäßen Trocknungshilfsmitteln können zusätzlich auch bekannte Trocknungshilfsmittel, wie Polyvinylalkohol, Polyvinylpyrrolidon, Phenolsulfonsäure-Formaldehyd-Kondensate, Naphthalinsulfonsäure-Formaldehyd-Kondensate, Homopolymerisate der 2-Acrylamido-2-methylpropansulfonsäure etc., mitverwendet werden. Auch Antibackmittel, wie hochdisperse Kieselsäure, die üblicherweise für die Trocknung von wäßrigen Polymerisatdispersionen verwendet werden, können eingesetzt werden, um ein Zusammenbacken des Polymerisatpulvers bei der Lagerung zu verhindern. Bei einer Sprühtrocknung werden die Antibackmittel in der Regel separat zugedüst. Sie können auch nachträglich in an sich bekannter Weise in das Polymerisatpulver eingearbeitet werden.

Eine andere Ausführungsform der vorliegenden Erfindung betrifft ein Trocknungsverfahren, bei dem das Trocknungsmittel, d. h. eines der oben beschriebenen Copolymerisate bereits bei der Herstellung der zu trocknenden Polymerisatdispersion zugegen ist. Anders gesagt, die zu trocknende Polymerisatdispersion ist durch radikalische, wässrige Emulsionspolymerisation der Monomere a und gegebenenfalls b in Gegenwart eines der oben beschriebenen Copolymerisate erhältlich. Derartige Polymerisatdispersionen können ohne Zusatz weiterer Trocknungshilfsmittel auf die oben beschriebene Weise getrocknet werden. Es ist jedoch auch möglich für die Trocknung derartiger Polymerisatdispersionen weitere Trocknungshilfsmittel, beispielsweise diejenigen der vorliegenden Erfindung oder jene des Standes der Technik, sowie Antibackmittel (s. o.) zu verwenden.

Bei dieser Ausführungsform können die erfindungsgemäßen Copolymerisate in einer ersten, separaten Polymerisationsreaktion hergestellt werden. Die hierbei erhältlichen Copolymerisate werden dann in Form eines Feststoffs oder vorzugsweise in Form ihrer Lösung, insbesondere einer Lösung ihrer Salze, bei der radikalischen wässrigen Emulsionspolymerisation der Monomere a und b verwendet. Hierbei wird das erfindungsgemäße Copolymerisat teilweise oder vorzugsweise vollständig vorgelegt.

Nicht zuletzt aus ökonomischen und verfahrenstechnischen Gründen ist es oftmals vorteilhaft, das Copolymerisat und die zu trocknende Polymerisatdispersion im Sinne einer Stufenpolymerisation herzustellen. Hierunter ist zu verstehen, daß man in einer ersten Stufe durch radikalische Polymerisation der Monomere A, B und gegebenenfalls C ein erfindungsgemäßes Copolymerisat herstellt und anschließend in der hierbei erhältlichen Reaktionsmischung eine radikalische wässrige Emulsionspolymerisation der Monomere a und b durchführt. Hinsichtlich der Monomere A, B, C, a und b gilt das oben gesagte. In der Regel werden vergleichbare Molverhältnisse der Monomere A, B und gegebenenfalls C eingesetzt wie bei der separaten Herstellung der Copolymerisate. Das bevorzugte Gewichtsverhältnis der Monomere der ersten Stufe (A, B und C) und der Monomere der zweiten Stufe (a und b) liegt im Bereich von 5:95 bis 50:50, insbesondere im Bereich von 10:90 bis 40:60, besonders bevorzugt im Bereich von 15:85 bis 30:70, und ganz besonders bevorzugt im Bereich von 20:80 bis 25:75.

Bei der Herstellung der ersten Stufe können die Monomere A sowohl in der Säureform als auch in ihrer Salzform verwendet werden (s. o.). Die Durchführung der ersten Stufe erfolgt in der oben beschriebenen Weise. Der ersten Stufe kann, insbesondere wenn die Monomere A in ihrer Säureform eingesetzt werden, eine Neutralisation mit einer Base, beispielsweise einem Alkali- oder Erdalkalihydroxid, folgen.

Wie bereits oben erwähnt, wird die zweite Stufe im Sinne einer radikalischen, wässrigen Emulsionspolymerisation durchgeführt.

Vorzugsweise erfolgt die Polymerisation der zweiten Stufe nach einem Zulaufverfahren (s. o.). Hierbei können die Monomere a und b gemeinsam oder getrennt dem Polymerisationsansatz zudosiert werden. In einer Ausführungsform der vorliegenden Erfindung werden die Monomere a und b als wässrige Emulsion dem Polymerisationsansatz zudosiert. In einer anderen Ausführungsform werden die Monomere a in flüssiger Form und die Monomere b separat als wässrige Lösung zudosiert. Die zulaufgeschwindigkeit der Monomere a und b ist in der Regel konstant, Sie kann allerdings auch kontinuierlich oder stufenweise erhöht werden.

Hinsichtlich der Initiatoren und der Regler gilt für die zweite Stufe im wesentlichen das oben für die Herstellung der zu trocknenden Polymerisatdispersionen gesagte. Vorzugsweise verwendet man in der zweiten Stufe keine Regler. Als Initiatoren der zweiten Stufe kommen vorzugsweise wasserlösliche Peroxide, wie Natriumperoxodisulfat oder Wasserstoffperoxid, letzteres vorzugsweise zusammen mit einem Reduktionsmittel wie Ascorbinsäure, Acetonbisulfit oder Natriumhydroxymethansulfinat (Redox-Initiatorsystem) zur Anwendung. Der Initiator wird vorzugsweise nach Maßgabe seines Verbrauchs dem Polymerisationsansatz zudosiert. Die Initiatormenge beträgt in der Regel 0,1 bis 2 Gew.-%, bezogen auf die Monomere der zweiten Stufe.

Die zweite Stufe kann sowohl mit als auch ohne ein übliches Dispergiermittel durchgeführt werden.

Beispiele für solche geeignete Dispergiermittel sind die klassischen Tenside. Beispielhaft genannt seien Dowfax®2A1 der Dow Chemical Company, ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkaliund Ammoniumsalze von Alkylsulfaten (Alkylrest: $C_8$ bis $C_{12}$), von Schwefelsäurehalbestern ethoxylierter Alkohole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Tenside finden sich in Houben-Weyl, Methoden der organischen Chemie, Band XIV/1, Makromolekulare Stoffe, Georg-Thieme Verlag, Stuttgart, 1961, Seiten 192 bis 208. Anstelle von oder im Gemisch mit klassischen Tensiden können aber auch konventionelle Schutzkolloide wie Polyvinylalkohol, Polyvinylpyrrolidon oder amphiphile Blockpolymere mit kurzen hydrophoben Blöcken zur Co-Stabilisierung eingesetzt werden. In der Regel wird die mitverwendete Menge an konventionellen Dispergiermitteln, bezogen auf die zu polymerisierenden Monomeren, 3 Gew.-%, vorzugsweise 2 Gew.-% nicht überschreiten.

Der Beschaffenheit des Dispergiermediums und dem verwendeten Initiatorsystem angepaßt bewegt sich die Polymerisationstemperatur der zweiten Stufe normalerweise zwischen 20 und 100 °C. Oft beträgt sie 50 bis 95 °C und häufig liegt sie bei 70 bis 90 °C. Selbstverständlich erfolgt die Herstellung der Stufenpolymerisate normalerweise unter Inertgas und unter Rühren.

Üblicherweise erfolgt die Polymerisation der zweiten Stufe bei Normaldruck ( 1 atm). Sie kann jedoch, insbesondere bei Verwendung von bei Normaldruck gasförmigen Monomeren, auch unter erhöhtem Druck erfolgen. In entsprechender Weise sind auch Polymerisationstemperaturen oberhalb von 100 °C möglich (z.B. bis 130 °C). Die Polymerisationsdauer der zweiten Stufe beträgt etwa 0,5 bis 7 Stunden, vorzugsweise 1 bis 5 Stunden.

Wie bereits oben erwähnt, kann sich der Polymerisationsreaktion ein übliches Verfahren zur Desodorierung anschließen. In einer bevorzugten Ausführungsform der vorliegenden Erfindung wird abschließend die Dispersion des Stufenpolymerisats mit einer Base, vorzugsweise einem Alkali- oder Erdalkalihydroxid, z. B. einer wässrigen Natronlauge oder einer wässrigen $Ca(OH)_2$-Aufschlämmung neutralisiert.

Es hat sich nun überraschenderweise gezeigt, daß bei der radikalischen, wässrigen Emulsionspolymerisation der Monomere a und b auf die üblichen Schutzkolloide und/oder Emulgatoren verzichtet werden kann, wenn man die Polymerisationsreaktion in Gegenwart der erfindungsgemäßen Copolymerisate aus den Monomeren A, B und gegebenenfalls C durchführt. Dabei ist es unerheblich, ob die erfindungsgemäßen Copolymerisate in einer separaten Reaktion oder als erste Stufe bei der Stufenpolymerisation hergestellt wurden. Die erfindungsgemäßen Copolymerisate weisen somit eine den üblichen Schutzkolloiden vergleichbare Wirkung auf.

Es ist bemerkenswert, dass auf diesem Wege emulgatorfreie, wässrige Polymerisatdispersionen erhältlich sind. Die Polymerisatteilchen in den so erhältlichen Polymerisatdispersionen enthalten somit wenigstens ein Copolymer, das aus den Monomeren A, B und gegebenenfalls C aufgebaut ist, sowie das Emulsionspolymerisat der Monomere a und gegebenenfalls b. Das Polymerisat in diesen Polymerisatdispersionen wird auch als Stufenpolymerisat bezeichnet, und zwar unabhängig davon, ob das Copolymer in einer separaten Polymerisationsreaktion hergestellt wurde oder in situ in der ersten Stufe der Polymerisationsreaktion erzeugt wurde. Derartige Polymerisatdispersionen zeichnen sich oftmals durch anwendungstechnische Vorteile aus, da der Emulgator sich störend auf die Verwendung auswirken kann. Die Verwendung der erfindungsgemäßen Copolymerisate als Schutzkolloide ist neu und somit ebenfalls Gegenstand der vorliegenden Erfindung.

Die bei Anwesenheit der erfindungsgemäßen Copolymerisate hergestellten Polymerisatdispersionen sind ebenfalls neu und Gegenstand der vorliegenden Erfindung. Ihr Feststoffgehalt liegt in der Regel im Bereich von 10 bis 75 Gew.-%, vorzugsweise 20 bis 65 Gew-.% und meist 30 bis 50 Gew.-%, bezogen auf das Gewicht der Polymerisatdispersion. Derartige Polymerisatdispersionen lassen sich ohne weitere Trocknungshilfsmittel in der oben beschriebenen Weise in Polymerisatpulver überführen. Weitere Trocknungshilfsmittel können jedoch verwendet werden. Dabei ist es unerheblich, ob das Copolymerisat durch eine separate Polymerisationsreaktion oder in der ersten Stufe der Stufenpolymerisationsreaktion hergestellt wurde (s. o.). Das so erhältliche Polymerisatpulver enthält somit das oben beschriebene Stufenpolymerisat und gegebenenfalls weitere Trocknungshilfsmittel.

Die bei erfindungsgemäßer Verwendung der Copolymerisate erhältlichen Polymerisatpulver eignen sich als Bindemittel in Anstrichstoffen, Lacken, Klebstoffen, Beschichtungsmassen (insbesondere für Papier) und Kunstharzputzen, wie sie in der EP-A 629 650 beschrieben sind. Dies trifft selbstverständlich auch auf wässrige Polymerisatdispersionen zu, die die erfindungsgemäßen Copolymerisate enthalten, insbesondere jene wässrigen Polymerisatdispersionen, die durch radikalische wässrige Emulsionspolymerisation in Gegenwart der erfindungsgemäßen Copolymerisate erhältlich sind.

Ein besonderer Schwerpunkt der vorliegenden Erfindung ist die Verwendung der erfindungsgemäß hergestellten Polymerisatpulver als Modifikatoren in mineralischen Baustoffen. Die mit den erfindungsgemäß hergestellten Polymerisatpulvern modifizierten mineralischen Baustoffe zeichnen sich gegenüber mineralischen Baustoffen, die mit herkömmlichen Polymerisatpulvern modifiziert sind, durch höhere Biege- und Druckfestigkeit während des Abbindevorgangs und eine höhere Endhärte aus. Weiterhin ist die Fließfähigkeit der gebrauchsfertigen mineralischen Baustoffzubereitungen verbessert und ihre Verarbeitbarkeit verlängert. Die Haftung auf verschiedensten Untergründen, beispielsweise auf saugenden Untergründen, wie Beton oder Marmor, auf Metallen und insbesondere auf unpolaren Untergründen, z. B. Hartschäume auf Polystyrol- oder Polyurethanbasis, mit hydrophoben Beschichtungen behandelte Untergründe, ist gegenüber mineralischen Baustoffen, die mit konventionellen Polymerisatpulvern modifiziert sind, ebenfalls verbessert.

In besonderer Weise tritt die vorteilhafte Wirkung der erfindungsgemäß hergestellten Polymerisatpulver bei Modifikation von mineralischen Baustoffen hervor, deren mineralisches Bindemittel aus 70 bis 100 Gew.-% Zement und 0 bis 30 Gew.-% Gips besteht. Besonders vorteilhaft ist die Wirkung in mineralischen Baustoffen, worin Zement das alleinige mineralische Bindemittel ist. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden.

Bevorzugt umfaßt die Trockenzusammensetzung der mineralischen Baustoffe: 20 bis 60 Gew.-%, vorzugsweise 20 bis 50 Gew.-% mineralisches Bindemittel, 0,1 bis 20 Gew.-%, vorzugsweise 0,1 bis 10 Gew.-% und insbesondere 0,1 bis 5 Gew.-% modifizierendes Polymerisatpulver, gegebenenfalls bis 25 Gew.-% an sich übliche Hilfsmittel, beispielsweise Entschäumer oder Verdicker, und als Restmenge Zuschläge wie Sand, Kies, Füllstoffe (z. B. Calciumcarbonat), Pigmente (z. B. $TiO_2$), natürliche oder synthetische Fasern etc. Derartige Trockenzusammensetzungen sind ebenfalls Gegenstand der vorliegenden Erfindung.

Die Einarbeitung der erfindungsgemäßen Polymerisatpulver in die mineralischen Baustoffe kann beispielsweise dadurch geschehen, daß man das Polymerisatpulver zu der mit Wasser angemachten mineralischen Baustoffzubereitung, d. h. einer Zubereitung, die bereits das mineralische Bindemittel und die Zuschläge sowie gegebenenfalls die Hilfsmittel enthält, gibt. Alternativ kann man die Polymerisatpulver nach üblichen Feststoffmischungsverfahren der noch nicht mit Wasser angemachten mineralischen Baustofftrockenzubereitung, d. h. einer Zubereitung aus mineralischem Bindemittel und Zuschlägen, zugeben. Darüber hinaus ist es möglich, das modifizierende Polymerisatpulver mit dem mineralischen Bindemittelbestandteil vorzuformulieren und erst bei Gebrauch Hilfsmittel, Wasser und Zuschläge zuzugeben.

Selbstverständlich ist es auch möglich, die wässrigen Polymerisatdispersionen und die erfindungsgemäßen Copolymerisate ohne vorherige Trocknung zu verwenden. Dies gilt insbesondere für wässrige Polymerisatdispersionen, die in Gegenwart der erfindungsgemäßen Copolymerisate hergestellt wurden.

Die im folgenden angegebenen Beispiele sollen die vorliegende Erfindung erläutern, ohne sie jedoch einzuschränken.

## Beispiele

### I. Analytik

#### a) Molekulargewicht

Die erfindungsgemäßen Copolymerisate wurden hinsichtlich ihres Molekulargewichts in der oben beschriebenen Weise mittels Gelpermeations-Chromatographie charakterisiert.

#### b) Lichtdurchlässigkeit

Als Lichtdurchlässigkeit ist die Lichtdurchlässigkeit einer 0,01 gew.-%igen wässrigen Dispersion bei 20 °C und einer Schichtdicke von 2,5 cm angegeben, wie sie mittels eines üblichen Photometers bei weißem Licht bestimmt wurde (LD-Wert).

### II. Herstellung der erfindungsgemäßen Copolymerisate C1 bis C7 und eines Copolymerisats des Standes der Technik CV1 (Beispiele 1 bis 7, Vergleichsbeispiel 1)

#### Beispiel 1: Copolymerisat C1

In einem Reaktor wurden 1,6 kg Natriumperoxodisulfat in 39,3 kg Wasser vorgelegt. Man erwärmte auf 80 °C. Anschließend gab man unter Beibehaltung der Temperatur Zulauf 1 kontinuierlich innerhalb 2 Stunden zu und ließ 1,5 Stunden bei 80 °C nachreagieren. Danach gab man unter Beibehaltung der Temperatur innerhalb 1 Stunde kontinuierlich Zulauf 2 zu. Nach weiteren 60 Minuten bei 80 °C ließ man auf Raumtemperatur abkühlen und filtrierte über ein 200 µm-Sieb. Man erhielt eine klare wässrige Lösung des Copolymerisats mit einem Feststoffgehalt von 38,8 Gew.-% und einem pH-Wert von 4,5.

| | | |
|---|---|---|
| Zulauf 1 | 15,1 kg | entionisiertes Wasser |
| | 9,1 kg | 25 Gew.-%ige wässrige Natronlauge |
| | 11,2 kg | Acrylsäure (AS) |
| | 0,1 kg | Ethylhexylthioglykolat |
| | 28,8 kg | Hydroxyethylmethacrylat (HEMA) |
| Zulauf 2 | 0,4 kg | Natriumperoxodisulfat |
| | 5,3 kg | entionisiertes Wasser |

Beispiel 2: Copolymerisat C2

In einem Reaktor wurden 0,6 kg Natriumperoxodisulfat in 26 kg Wasser vorgelegt und auf 80 °C erwärmt. Zeitgleich beginnend wurden bei 80 °C Zulauf 1 innerhalb 2 Stunden und Zulauf 2 innerhalb 2,5 Stunden zugegeben. Nach Beendigung von Zulauf 2 ließ man 60 Minuten bei 80 °C nachreagieren und filtrierte dann über ein 200 µm Sieb. Man erhielt eine klare, wässrige Lösung des Copolymerisats mit einem Feststoffgehalt von 38,8 Gew.-% und einem pH-Wert von 4,4.

| | | |
|---|---|---|
| Zulauf 1 | wie Beispiel 1 | |
| Zulauf 2 | 1,4 kg | Natriumperoxodisulfat |
| | 18,6 kg | entionisiertes Wasser |

Beispiel 3: Copolymerisat C3

Die Polymerisation wurde analog Beispiel 1 durchgeführt.

| | | |
|---|---|---|
| Vorlage | 1,6 kg | Natriumperoxodisulfat |
| | 30,0 kg | entionisiertes Wasser |
| Zulauf 1 | 15,0 kg | entionisiertes Wasser |
| | 10,1 kg | 25 gew.-%ige wässrige Natronlauge |
| | 12,7 kg | Acrylsäure (AS) |
| | 4,2 kg | 50 gew.-%ige Lösung von 2-Acrylamido-2-methylpropansulfonsäure als Natriumsalz in Wasser (AMPS) |
| | 25,2 kg | Hydroxypropylacrylat (HPA) |
| Zulauf 2 | 0,4 kg | Natriumperoxodisulfat |
| | 11,7 kg | entionisiertes Wasser |

Die erhaltene klare, wässrige Copolymerlösung wies einen Feststoffgehalt von 37,9 Gew.-% und einen pH-Wert von 4,6 auf.

Beispiel 4: Copolymerisat C4

Die Polymerisation wurde analog Beispiel 1 durchgeführt.

Vorlage: wie Beispiel 1

| | | |
|---|---|---|
| Vorlage | wie Beispiel 1 | |
| Zulauf 1 | 14,4 kg | entionisiertes Wasser |
| | 10,9 kg | 25 gew.-%ige wässrige Natronlauge |
| | 13,9 kg | Acrylsäure (AS) |
| | 0,1 kg | 2-Ethylhexylthioglykolat |
| | 26,1 kg | 2-Hydroxyethylmethacrylat (HEMA) |
| Zulauf 2 | wie Beispiel 1 | |

Zulauf 2: wie Beispiel 1

Die erhaltene klare, wässrige Lösung des Copolymerisats wies einen Feststoffgehalt von 38,6 Gew.-% und einen pH-Wert von 4,5 auf.

Beispiel 5: Copolymerisat C5

Die Polymerisation wurde analog Beispiel 1 durchgeführt.

| | | |
|---|---|---|
| Vorlage | 0,5 kg | Natriumperoxodisulfat |
| | 11,8 kg | entionisiertes Wasser |
| Zulauf 1 | 6,6 kg | entionisiertes Wasser |
| | 0,8 kg | Calciumhydroxid |
| | 4,2 kg | Acrylsäure (AS) |
| | 7,8 kg | Hydroxyethylmethacrylat (HEMA) |
| Zulauf 2 | 0,1 kg | Natriumperoxodisulfat |
| | 1,6 kg | entionisiertes Wasser |

Die erhaltene klare, wässrige Lösung des Copolymerisats wies einen Feststoffgehalt von 39,4 Gew.-% und einen pH-Wert von 4,5 auf.

Beispiel 6: Copolymerisat C6

Die Polymerisation wurde analog Beispiel 1 durchgeführt.

| | | |
|---|---|---|
| Vorlage | 1,2 kg | Natriumperoxodisulfat |
| | 45,0 kg | entionisiertes Wasser |

(fortgesetzt)

| | | |
|---|---|---|
| Zulauf 1 | 15,1 kg | entionisiertes Wasser |
| | 10,7 kg | 25 gew.-%ige wässrige Natronlauge |
| | 3,2 kg | Acrylsäure (AS) |
| | 14,2 kg | Methacrylsäure (MAS) |
| | 0,1 kg | 2-Ethylhexylthioglykolat |
| | 12,6 kg | Hydroxypropylacrylat (HPA) |
| Zulauf 2 | 0,3 kg | Natriumperoxodisulfat |
| | 11,7 kg | entionisiertes Wasser |

Die erhaltene klare, wässrige Lösung des Copolymerisats wies einen Feststoffgehalt von 29,1 Gew.-% und einen pH-Wert von 5,0 auf.

Beispiel 7: Copolymerisat C7

Die Polymerisation wurde wie in Beispiel 2 durchgeführt.

| | | |
|---|---|---|
| Vorlage | 0,6 kg | Natriumperoxodisulfat |
| | 26,0 kg | entionisiertes Wasser |
| Zulauf 1 | 14,4 kg | entionisiertes Wasser |
| | 10,9 kg | 25 gew.-%iger Natronlauge |
| | 13,9 kg | Acrylsäure (AS) |
| | 0,1 kg | Ethylhexylthioglykolat |
| | 26,1 kg | Hydroxyethylmethacrylat (HEMA) |
| Zulauf 2 | wie Beispiel 2 | |

Die erhaltene klare, wässrige Lösung des Copolymerisats wies einen Feststoffgehalt von 39,1 Gew.-% und einen pH-Wert von 4,4 auf.

Vergleichsbeispiel 1: Copolymerisat CV1

In einem Druckreaktor wurden unter Inertgasatmosphäre 700 g Isopropanol vorgelegt und auf 135 °C erhitzt. Der Innendruck bewegte sich dabei und in der Folgezeit im Bereich von 2,2 bis 4,8 bar. Zeitgleich beginnend gab man dann die Monomermischung innerhalb 210 Minuten und den Initiatorzulauf innerhalb 240 Minuten unter Aufrechterhaltung der Temperatur kontinuierlich zu. Man behielt die Temperatur weitere 90 Minuten bei, kühlte auf Raumtemperatur und verdünnte mit 472 ml Isopropanol. Die erhaltene farblos klare Polymerlösung wies einen Feststoffgehalt von 52,4 Gew.-% auf.

| | | |
|---|---|---|
| Monomerenmischung | 560,0 g | Acrylsäure (AS) |
| | 840,0 g | Styrol (S), |
| Initiatorzulauf | 14,0 g | tert.-Butylperoctoat |
| | 2,8 g | Di-tert.-butylperoxid |
| | 245,0 g | Isopropanol |

Tabelle 1:

| Monomerzusammensetzung, Molekulargewichte und Glasübergangstemperaturen der Copolymerisate C1 - C7 sowie CV1 | | | | | | | |
|---|---|---|---|---|---|---|---|
| | Monomer A mol-% | Monomer B mol-% | Monomer C mol-% | $M_n$ g/mol | $M_w$ g/mol | U | $T_G$ 1)°C |
| C1 | AS 41,3 | HEMA 58,7 | - | 11.200 | 51.200 | 4,6 | 97 |
| C2 | AS 41,3 | HEMA 58,7 | - | 13.500 | 65.000 | 4.8 | 97 |
| C3 | AS 46,5 | HPA 51,1 | AMPS 2.4 | 8.200 | 26.800 | 3,3 | 15 |
| C4 | AS 49,0 | HEMA 51,0 | - | 12.300 | 57.900 | 4,7 | 100 |
| C5 | AS 49,0 | HEMA 51,0 | - | 12.800 | 63.200 | 4,9 | 100 |
| C6 | AS 14,3 MAS 54,0 | HPA 31,7 | - | 10.500 | 47.400 | 4,1 | 58 |
| C7 | AS 49,0 | HEMA 51,0 | - | 16.000 | 91.000 | 5,7 | 100 |
| CV1 | AS 49,0 | | S 51.0 | 13.100 | 34.600 | 2,6 | 116 |

1) berechnete Glasübergangstemperatur nach Fox ($T_G^{Fox}$)

AS = Acrylsäure; MAS = Methacrylsäure; HEMA = Hydroxyethylmethacrylat; HPA = Hydroxypropylacrylat (technisches Gemisch aus 2-Hydroxypropyl-1- und 1-Hydroxypropyl-2-acrylat); AMPS = 2-Acrylamido-2-methylpropansulfonsäure; S = Styrol

III. Herstellung der zu trocknenden Dispersionen D1 bis D4

Dispersion D1

In einen Reaktor wurden ein Gemisch aus 14,0 kg Wasser, 0,9 kg einer 20 gew.-%igen Lösung eines ethoxylierten Talgfettalkohols (Ethoxilierungsgrad 18), 0,42 kg einer 10 gew.-%igen wässrigen Ameisensäure-Lösung, 0,18 kg Natriumhydrogencarbonat und 7,6 kg von Zulauf 1 vorgelegt. Man erhitzte auf 90 °C und gab dann unter Beibehaltung der Temperatur auf einmal 0,5 kg von Zulauf 2 zu. Anschließend gab man innerhalb 2 Stunden den Rest von Zulauf 1 und innerhalb 2,5 Stunden den Rest von Zulauf 2 zu und ließ nach Beendigung von Zulauf 2 weitere 2 Stunden reagieren. Man ließ auf 60 °C abkühlen, gab dann eine Lösung von 0,1 kg tert.-Butylhydroperoxid in 2,3 kg Wasser und anschließend bei 60 °C innerhalb 1 Stunde eine Lösung von 0,2 kg Ascorbinsäure in 4,0 kg Wasser zu. Man behielt die Temperatur weitere 0,5 Stunden bei, kühlte auf Raumtemperatur, gab eine Aufschlämmung von 0,2 kg $Ca(OH)_2$ in 0,7 kg Wasser zu und filtrierte über ein 200 µm-Sieb. Die Glasübergangstemperatur, berechnet nach Fox ($T_G^{Fox}$) betrug -6 °C.

Der Feststoffgehalt der erhaltenen Polymerisatdispersion betrug 59,9 Gew.-%, der LD-Wert 16 % und der pH-Wert 7.

| | | |
|---|---|---|
| Zulauf 1 | Monomeremulsion, enthaltend | |
| | 7,5 kg | entionisiertes Wasser |
| | 2,4 kg | einer 20-gew.-%igen Lösung eines ethoxilierten Talgfettalkohols (Ethoxilierungsgrad 18); (Emulgator I) |
| | 1,4 kg | einer 30 gew.-%igen Lösung des Natriumsalzes des Schwefelsäurehalbesters eines ethoxilierten Talgfettalkohols (Ethoxilierungsgrad 30); (Emulgator II) |
| | 4,0 kg | 15 gew.-%ige wässrige Methacrylamid-Lösung |
| | 2,4 kg | 50 gew.-%ige wässrige Acrylamidlösung |
| | 21,0 kg | Styrol |
| | 37,2 kg | n-Butylacrylat |

(fortgesetzt)

| | | |
|---|---|---|
| Zulauf 2 | 4,6 kg | entionisiertes Wasser |
| | 0,35 kg | Natriumperoxodisulfat |

Es wurde eine Emulsionspolymerisation, wie für D1 beschrieben, durchgeführt.

| | | |
|---|---|---|
| Zulauf 1 | Monomeremulsion, enthaltend | |
| | 7,3 kg | entionisiertes Wasser |
| | 2,4 kg | Emulgator I |
| | 1,4 kg | Emulgator II |
| | 4,0 kg | 15 gew.-%iger wässrige Methacrylamid-Lösung |
| | 2,4 kg | 50 gew.-%iger wässrige AcrylamidLösung |
| | 27,0 kg | Styrol |
| | 31,2 kg | n-Butylacrylat |

Der Feststoffgehalt der erhaltenen Polymerisatdispersion betrug 58,7 Gew.-%, der LD-Wert 17 %, die $T_G^{Fox}$ 7 °C und der pH-Wert 7,2.

Dispersion D3

In einem Polymerisationsgefäß wurde eine Mischung aus 500 g Wasser, 2,5 g Natriumacetat, 2,5 g Butenol und 10 g einer ethoxylierten Cellulose (Natrosol® 250 GR) auf 80 °C erwärmt. Dann wurden auf einmal zunächst 150 g Zulauf 1 und danach 10 g Zulauf 2 in das Polymerisationsgefäß eingetragen und 20 Minuten bei 80 °C polymerisiert. Anschließend wurde zeitgleich beginnend die Restmenge von Zulauf 1 (innerhalb von 3 Stunden) und die Restmenge von Zulauf 2 (innerhalb von 3,5 Stunden) unter Aufrechterhaltung der 80 °C, kontinuierlich zudosiert. Danach wurde noch 1 Stunde bei 80 °C gerührt und schließlich auf Raumtemperatur abgekühlt.

Der Feststoffgehalt der resultierenden wässrigen Polymerisatdispersion betrug 50,2 Gew.-%. Ihr pH-Wert lag bei 4 und der LD-Wert bei 20 %. Das dispergierte Polymerisat wies eine Glasübergangstemperatur von -2 °C auf (DSC midpoint), die $T_G^{Fox}$ lag bei 4 °C.

| | | |
|---|---|---|
| Zulauf 1 | Monomeremulsion aus | |
| | 600 g | Vinylpropionat |
| | 200 g | tert.-Butylacrylat |
| | 150 g | einer 20 gew.-%igen wässrigen Lösung von ethoxyliertem p-Isooctylphenol (Ethoxilierungsgrad 25), gemischt mit |
| | 10 g | eines Blockcopolymeren aus Ethylenoxid und Propylenoxid (molares Verhältnis EO:PO = 0,7 und das relative zahlenmittlere Molekulargewicht = 3200) und |
| | 343 g | Wasser |
| Zulauf 2 | 5 g | Natriumperoxodisulfat in 100 g Wasser. |

Dispersion D4

In einem Polymerisationsgefäß wurde eine Lösung aus 6000 g Wasser und 17 g einer 45 gew.-%igen wässrigen Lösung der Dowfax 2A1 entsprechenden grenzflächenaktiven Substanz (Emulgator III) auf die Polymerisationstemperatur von 80 °C erwärmt. Anschließend wurden nacheinander auf einmal 1087 g Zulauf 1 und 108 g Zulauf 2 ins Polymerisationsgefäß gegeben und 30 Minuten bei 80 °C polymerisiert. Anschließend wurden unter Aufrechterhaltung der Polymerisationstemperatur die Restmengen der Zuläufe 1 und 2 zeitgleich beginnend während 3,5 Stunden kontinuierlich zugeführt. Anschließend wurde das Reaktionsgemisch 4 Stunden bei 80 °C sich selbst überlassen. Abschließend wurde auf Raumtemperatur abgekühlt und mit 420 g einer 25 gew.-%igen wässrigen Natriumhydroxidlösung

neutralisiert.

Der Festgehalt der resultierenden wässrigen Polymerisatdispersion betrug 50,9 %. Ihr pH-Wert lag bei 8 und der LD-Wert bei 46 %. Das dispergierte Polymerisat wies eine Glasübergangstemperatur von 60 °C auf, die $T_G^{Fox}$ lag bei 49 °C.

| | | |
|---|---|---|
| Zulauf 1 | 12.150 g | Styrol |
| | 2.250 g | Butadien |
| | 450 g | einer 50 %igen wässrigen Lösung von Acrylamid |
| | 375 g | Acrylsäure |
| | 120 g | tert.-Dodecylmercaptan |
| | 117 g | Emulgator III |
| | 250 g | einer 15 gew.-%igen wässrigen Lösung des Natriumsalzes des Schwefelsäure halbesters von Laurylalkohol und |
| | 6.033 g | Wasser |
| Zulauf 2 | 150 g | Natriumperoxodisulfat und |
| | 200 g | Wasser |

IV. Herstellung der erfindungsgemäßen Stufenpolymerisate SD1 bis SD7 (Beispiel 8 bis Beispiel 14)

Beispiel 8: Stufenpolymerisat SD1

Es wurde zunächst eine wässrige Monomerlösung (Zulauf 1) aus:

| | |
|---|---|
| 387,0 g | entionisiertem Wasser |
| 151,2 g | 2-Hydroxyethylmethacrylat, |
| 58,8 g | Acrylsäure und |
| 0,4 g | Ethylhexylthioglykolat |

bereitet. In einem Reaktionsgefäß wurden 8,4 g Natriumperoxodisulfat und 600 g Wasser vorgelegt und auf 80 °C erwärmt. Unter Beibehaltung der Temperatur gab man Zulauf 1 innerhalb 1 Stunde kontinuierlich zu. 45 Minuten nach Beginn von Zulauf 1 wurde innerhalb weiterer 45 Minuten Zulauf 2 zugegeben. Nach Beendigung von Zulauf 1 behielt man die Temperatur eine Stunde bei und gab dann bei 80 °C Zulauf 3 innerhalb 1,5 Stunden und Zulauf 4 innerhalb 2 Stunden zu. Nach Beendigung von Zulauf 4 ließ man 1 Stunde bei 80 °C nachreagieren. Man kühlte dann auf Raumtemperatur, gab 134,4 g einer 25 gew.-%igen wässrigen Natronlauge zu und filtrierte über ein 200 µm-Sieb.

Der Feststoffgehalt der erhaltenen Dispersion betrug 34,4 Gew.-%, der LD-Wert 10 % und der pH-Wert 7,1. Für die erste Stufe lag die $T_G^{Fox}$ bei 97 °C und für die zweite Stufe bei 12 °C.

| | | |
|---|---|---|
| Zulauf 2 | Lösung aus | |
| | 81,0 g | entionisiertem Wasser |
| | 2,1 g | Natriumperoxodisulfat |

(fortgesetzt)

| | | |
|---|---|---|
| Zulauf 3 | wässrige Monomeremulsion aus | |
| | 410,0 g | entionisiertem Wasser |
| | 4,7 g | Emulgator III |
| | 56,0 g | 15 gew.-%iger wässriger Methacrylamid-Lösung |
| | 33,6 g | 50 gew.-%iger wässriger Acrylamid-Lösung |
| | 378,0 g | Styrol |
| | 436,8 g | n-Butylacrylat |
| Zulauf 4 | Lösung aus | |
| | 410,0 g | entionisiertes Wasser |
| | 10,5 g | Natriumperoxodisulfat |

Beispiel 9: Stufenpolymerisat SD2

Es wurde zunächst eine Monomerlösung (Zulauf 1) aus

| | |
|---|---|
| 93,0 g | entionisiertem Wasser |
| 23,4 g | 25 gew.-%iger wässriger Natronlauge |
| 56,7 g | Hydroxyethylmethacrylat |
| 28,8 g | Acrylsäure |
| 9,0 g | 50 gew.-%ige wässrige Lösung des Natriumsalzes der 2-Acrylamido-2-methylpropansulfonsäure |
| 0,2 g | Ethylhexylthioglykolat |

zubereitet. In einem Reaktionsgefäß erhitzte man 3,6 g Natriumperoxodisulfat und 120 g entionisiertes Wasser auf 80 °C und gab hierzu innerhalb 1 Stunde Zulauf 1 unter Beibehaltung der Temperatur zu. 45 Minuten nach Beginn von Zulauf 1 gab man innerhalb 45 Minuten Zulauf 2 kontinuierlich zu. Nach Beendigung von Zulauf 2 ließ man weitere 50 Minuten bei 80 °C reagieren.

Hiernach gab man unter Beibehaltung der 80 °C Zuläufe 3 und 4 innerhalb 1,5 Stunden und Zulauf 5 innerhalb 2 Stunden zu. Anschließend ließ man weitere 60 Minuten bei 80 °C nachreagieren, gab dann 45 g einer 20 gew.-%igen Aufschlämmung von Calciumhydroxid in Wasser zu und filtrierte über ein 200 µm-Sieb.

Die erhaltene wässrige Polymerisatdispersion wies einen Feststoffgehalt von 43,9 Gew.-%, eine Lichtdurchlässigkeit von 43 % und einen pH-Wert von 6,4 auf. Die $T_G^{Fox}$ der ersten Stufe lag bei 119 °C und die der zweiten Stufe bei 12 °C.

| | | |
|---|---|---|
| Zulauf 2 | Lösung aus | |
| | 0,9 g | Natriumperoxodisulfat |
| | 35,0 g | entionisiertem Wasser |
| Zulauf 3 | 162,0 g | Styrol |
| | 187,2 g | n-Butylacrylat |
| Zulauf 4 | Lösung aus | |
| | 70,0 g | entionisiertem Wasser |
| | 24,0 g | 15 gew.-%ige wässriger Methacrylamid-Lösung |
| | 14,4 g | 50 gew.-%ige wässriger Acrylamid-Lösung |

(fortgesetzt)

| | | |
|---|---|---|
| Zulauf 5 | Lösung aus | |
| | 4,5 g | Natriumperoxodisulfat |
| | 175,0 g | entionisiertem Wasser |

Beispiel 10: Stufenpolymerisat SD3

Die Polymerisation wurde wie in Beispiel 8 beschrieben durchgeführt. Die abschließende Einstellung des pH-Wertes erfolgte abweichend mit 234 g einer 25 gew.-%igen wässrigen Natronlauge.

| | | |
|---|---|---|
| Vorlage | Lösung aus | |
| | 12,0 g | Natriumperoxodisulfat |
| | 468,0 g | entionisiertes Wasser |
| Zulauf 1 | Lösung aus | |
| | 266,0 g | entionisiertem Wasser |
| | 189,0 g | Hydroxypropylacrylat |
| | 96,0 g | Acrylsäure |
| | 30,0 g | 50 gew.-%iger wässriger Lösung des Natriumsalzes der 2-Acrylamido-2-methylpropansulfonsäure |
| | 0,6 g | Ethylhexylthioglykolat |
| Zulauf 2 | 3,0 g | Natriumperoxodisulfat |
| | 117,0 g | entionisiertes Wasser |
| Zulauf 3 | Monomeremulsion aus | |
| | 257,0 g | entionisiertem Wasser |
| | 6,7 g | Emulgator III |
| | 80,0 g | 15 gew.-%iger wässriger Methacrylamid-Lösung |
| | 48,0 g | 50 gew.-%iger wässriger AcrylamidLösung |
| | 540,0 g | Styrol |
| | 624,0 g | n-Butylacrylat |
| Zulauf 4 | Lösung aus | |
| | 15,0 g | Natriumperoxodisulfat |
| | 198,0 g | entionisiertem Wasser |

Die erhaltene wässrige Polymerisatdispersion wies einen Feststoffgehalt von 48,6 Gew.-%, einen LD-Wert von 33 % und einen pH-Wert von 7,0 auf. Die $T_G^{Fox}$ der ersten Stufe lag bei 30 °C, die der zweiten Stufe bei 12 °C.

Beispiel 11: Stufenpolymerisat SD4

Die Herstellung der Stufenpolymerisatdispersion erfolgte analog Beispiel 8. Davon abweichend wurde abschließend die wässrige Polymerisatdispersion durch Zugabe von 168 g einer 25 gew.-%igen Natronlauge neutralisiert.

| | | |
|---|---|---|
| Vorlage | 8,4 g | Natriumperoxodisulfat |
| | 600,0 g | entionisiertes Wasser |

(fortgesetzt)

| | | |
|---|---|---|
| Zulauf 1 | Lösung aus | |
| | 389,0 g | entionisiertem Wasser |
| | 137,6 g | Hydroxyethylmethacrylat |
| | 72,5 g | Acrylsäure |
| | 0,4 g | Ethylhexylthioglykolat |
| Zulauf 2 | Lösung aus | |
| | 2,1 g | Natriumperoxodisulfat |
| | 81,0 g | entionisiertem Wasser |
| Zulauf 3 | Monomeremulsion aus | |
| | 398,0 g | entionisiertem Wasser |
| | 4,7 g | Emulgator III |
| | 56,0 g | 15 gew.-%iger Methacrylamid-Lösung |
| | 33,6 g | 50 gew.-%iger Acrylamid-Lösung |
| | 378,0 g | Styrol |
| | 436,8 g | n-Butylacrylat |
| Zulauf 4 | Lösung aus | |
| | 10,5 g | Natriumperoxodisulfat |
| | 410,0 g | entionisiertem Wasser |

Die erhaltene wässrige Polymerisatdispersion wies einen Feststoffgehalt von 34,1 Gew.-%, einen LD-Wert von 24 % und einen pH-Wert von 9,7 auf. Die $T_G^{Fox}$ der ersten Stufe lag bei 100 °C, die der zweiten Stufe bei 12 °C.

Beispiel 12: Stufenpolymerisat SD5

Die Herstellung der Stufenpolymerisatdispersion erfolgte analog Beispiel 8. Die abschließende Einstellung des pH-Wertes erfolgte mit 168 g einer 25 gew.-%igen Natronlauge.

| | | |
|---|---|---|
| Vorlage | 8,0 g | Natriumperoxodisulfat |
| | 500,0 g | entionisiertes Wasser |
| Zulauf 1 | Lösung aus | |
| | 393,0 g | entionisiertem Wasser |
| | 125,0 g | Hydroxyethylacrylat |
| | 75,0 g | Acrylsäure |
| | 0,4 g | Ethylhexylthioglykolat |
| Zulauf 2 | Lösung aus | |
| | 2,0 g | Natriumperoxodisulfat |
| | 81,0 g | entionisiertem Wasser |

(fortgesetzt)

| | | |
|---|---|---|
| Zulauf 3 | Monomeremulsion aus | |
| | 396,0 g | entionisiertem Wasser |
| | 4,4 g | Emulgator III |
| | 53,3 g | 15 gew.-%iger Methacrylamid-Lösung |
| | 32,0 g | 50 gew.-%iger Acrylamid-Lösung |
| | 360,0 g | Styrol |
| | 416,0 g | n-Butylacrylat |
| Zulauf 4 | Lösung aus | |
| | 10,0 g | Natriumperoxodisulfat |
| | 416,0 g | entionisiertem Wasser |

Die erhaltene wässrige Polymerisatdispersion wies einen Feststoffgehalt von 34,7 Gew.-%, eine Lichtdurchlässigkeit von 54 % und einen pH-Wert von 6,8 auf. Die $T_G^{Fox}$ der ersten Stufe lag bei 9 °C, die der zweiten Stufe bei 12 °C.

Beispiel 13: Stufenpolymerisat SD6

Die Herstellung der Stufenpolymerisatdispersion erfolgte analog Beispiel 9. Davon abweichend wurde anschließend mit 67,5 g einer 20 gew.-%igen wässrigen Calciumhydroxidaufschlämmung neutralisiert.

| | | |
|---|---|---|
| Vorlage | 3,6 g | Natriumperoxodisulfat |
| | 120,0 g | entionisiertes Wasser |
| Zulauf 1 | Lösung aus | |
| | 91,0 g | entionisiertem Wasser |
| | 25,2 g | 25 gew.-%iger wässriger Natronlauge |
| | 58,5 g | Hydroxypropylacrylat |
| | 31,5 g | Acrylsäure |
| | 0,2 g | Ethylhexylthioglykolat |
| Zulauf 2 | Lösung aus | |
| | 0,9 g | Natriumperoxodisulfat |
| | 35,0 g | entionisiertem Wasser |
| Zulauf 3 | 162,0 g | Styrol |
| | 187,2 g | n-Butylacrylat |
| Zulauf 4 | Lösung aus | |
| | 64,0 g | entionisiertem Wasser |
| | 24,0 g | 15 gew.-%iger wässriger Methacrylamid-Lösung |
| | 14,4 g | 50 gew.-%iger wässriger Acrylamidlösung |

(fortgesetzt)

| | | |
|---|---|---|
| Zulauf 5 | Lösung aus | |
| | 4,5 g | Natriumperoxodisulfat |
| | 175,0 g | entionisiertes Wasser |

Die erhaltene wässrige Polymerisatdispersion wies einen Feststoffgehalt von 44,3 Gew.-%, einen LD-Wert von 50 % und einen pH-Wert von 10,7 auf. Die $T_G^{Fox}$ der ersten Stufe lag bei 17 °C, die der zweiten Stufe bei 12 °C.

Beispiel 14: Stufenpolymerisat SD7

Die Herstellung der Stufenpolymerisatdispersion erfolgte analog Beispiel 9. Die abschließende Einstellung des pH-Wertes erfolgte durch Zugaben von 50,0 g einer 20 gew.-%igen Natronlauge.

| | | |
|---|---|---|
| Vorlage | Lösung aus | |
| | 2,4 g | Natriumperoxodisulfat |
| | 150,0 g | entionisiertem Wasser |
| Zulauf 1 | Lösung aus | |
| | 154,0 g | entionisiertem Wasser |
| | 24,0 g | Hydroxypropylacrylat |
| | 27,0 g | Methacrylsäure |
| | 6,0 g | Acrylsäure |
| | 6,0 g | 50 gew.-%iger wässriger Lösung des Natriumsalzes der 2-Acrylamido-2-methylpropansulfonsäure |
| | 0,1 g | Ethylhexylthioglykolat |
| Zulauf 2 | Lösung aus | |
| | 0,9 g | Natriumperoxodisulfat |
| | 35,0 g | entionisiertem Wasser |
| Zulauf 3 | 108,0 g | Styrol |
| | 124,8 g | n-Butylacrylat |
| Zulauf 4 | Lösung aus | |
| | 74,0 g | entionisiertem wasser |
| | 16,0 g | 15 gew.-%iger wässriger Methacrylamid-Lösung |
| | 9,6 g | 50 gew.-%iger wässriger Acrylamidlösung |
| Zulauf 5 | Lösung aus | |
| | 3,0 g | Natriumperoxodisulfat |
| | 117,0 g | entionisiertes Wasser |

Die erhaltene wässrige Polymerisatdispersion wies einen Feststoffgehalt von 34,0 Gew.-%, einen LD-Wert von 33 % und einen pH-Wert von 6,7 auf. Die $T_G^{Fox}$ der ersten Stufe lag bei 75 °C, die der zweiten Stufe bei 12 °C.

V. Herstellung der Polymerisatpulver:

V.1 Herstellung eines Sprühhilfsmittels auf der Basis von Naphthalinsulfonsäure-Formaldehyd-Kondensationsprodukten (Sprühhilfsmittel S1).

1,20 kg Naphthalin wurden bei 85 °C vorgelegt und unter Kühlen mit 1,18 kg konzentrierter Schwefelsäure derart versetzt, daß die Innentemperatur stets unter 150 °C lag. Nach beendeter Zugabe ließ man 5 h bei 140 bis 150 °C Innentemperatur nachreagieren. Das Reaktionsgemisch wurde auf 50 °C abgekühlt und unter Einhaltung einer Innentemperatur von 50 bis 55 °C portionsweise mit 0,80 kg einer 30 gew.-%igen wässrigen Formaldehydlösung versetzt. Nach beendeter Zugabe gab man sofort 0,70 kg vollentsalztes Wasser hinzu, heizte auf 100 °C auf und ließ 5 h bei dieser Temperatur weiterreagieren. Dann kühlte man auf 65 °C ab und gab 0,80 kg einer 35 gew.-%igen Calciumhydroxid-Aufschlämmung in vollentsalztem Wasser hinzu. Man filtrierte über ein 200-µm-Sieb ab und erhielt 2,1 kg einer wäßrigen Lösung S1 mit einem Feststoffgehalt von 35 Gew.-% und einem pH-Wert von 8,0.

V.2 Herstellung der Polymerisatpulver durch Sprühtrocknung

Für die Herstellung der Polymerisatpulver wurden die wässrigen Copolymerisatlösungen C1 bis C7 sowie die alkoholische Lösung des Copolymerisats CV1 mit Wasser auf einen Feststoffgehalt von 30 Gew.-%, die Polymerisatdispersionen D1 bis D4 auf einen Feststoffgehalt von 50 Gew.-%, die Dispersionen der Stufenpolymerisate SD1 bis SD7 auf einen Feststoffgehalt von 40 Gew.-% verdünnt, sofern der Feststoffgehalt darüber lag. Stufenpolymerisate mit geringerem Feststoffgehalt wurden unverdünnt eingesetzt. Das Sprühhilfsmittel S1 wurde auf einen Feststoffgehalt von 20 Gew.-% verdünnt.

Die wässrigen Lösungen der Copolymerisate aus den Beispielen 1 bis 7 wurden gegebenenfalls zusammen mit der Lösung des Sprühhilfsmittels S1 zu den wässrigen Polymerisatdispersionen D1 bis D4 gegeben. Anschließend verdünnte man mit vollentsalztem Wasser auf einen Feststoffgehalt von 35 Gew.-%. Entsprechend verfuhr man mit den Dispersionen der Stufenpolymerisate SD1 bis SD7. Zum Vergleich wurde eine Zubereitung aus Copolymerisat CV1 und Dispersion D2 mit einem Feststoffgehalt von 35 Gew.-% bereitet.

Die Sprühtrocknung erfolgte in einem Minor-Labortrockner der Fa. GEA Wiegand GmbH (Geschäftsbereich Niro) mit Zweistoffdüsenzerstäubung bei einer Turm-Eingangstemperatur von 130 °C und einer Ausgangstemperatur von 60 °C (Leistung: ca. 2 kg Sprühspeise/h). Als Anti-Blockmittel wurden gleichzeitig mit der Sprühspeise ca. 2,0 Gew.-% (bezogen auf feste Polymerisat-Mischung) einer feinteiligen Kieselsäure in die Trocknungskammer zudosiert. Mengenverhältnisse, die Trocknungsbedingungen sowie deren Resultate sind in Tabelle 2 zusammengefaßt.

Tabelle 2

| Ergebnisse der Sprühtrocknung | | | | | |
|---|---|---|---|---|---|
| Pulver | Dispersion[1)] | Copolymerisat[1)] | Sprühhilfsmittel[1)] | Wandbelag | Pulverausbeute |
| P1 | 80 GT D1 | 20 GT C1 | ohne | gering | 85 % |
| P2 | 80 GT D2 | 20 GT C1 | ohne | gering | 77 % |
| P3 | 80 GT D1 | 20 GT C2 | ohne | gering | 92 % |
| P4 | 80 GT D2 | 20 GT C2 | ohne | gering | 68 % |
| P5 | 72.7 GT D1 | 20 GT C3 | 7.3 GT S1 | gering | 71 % |
| P6 | 80 GT D1 | 20 GT C4 | ohne | gering | 70 % |
| P7 | 80 GT D2 | 20 GT C4 | ohne | gering | 64 % |
| P8 | 80 GT D2 | 20 GT C5 | ohne | gering | 67 % |
| P9 | 80 GT D3 | 20 GT C1 | ohne | gering | 71 % |
| P10 | 80 GT D4 | 20 GT C1 | ohne | gering | 78 % |
| P11 | 100 GT SD1 | | ohne | gering | 70 % |
| P12 | 95,2 GT SD1 | | 4.8 GT S1 | gering | 69 % |
| P13 | 90,9 GT SD1 | | 9.1 GT S1 | gering | 70 % |

[1)] Berechnet als Festanteil der Dispersion bzw. der Copolymerisatlösung; alle Angaben (GT) sind Gewichtsteile.

Tabelle 2 (fortgesetzt)

| Ergebnisse der Sprühtrocknung | | | | | |
|---|---|---|---|---|---|
| Pulver | Dispersion[1)] | Copolymerisat[1)] | Sprühhilfsmittel[1)] | Wandbelag | Pulverausbeute |
| P14 | 100 GT SD2 | | ohne | gering | 86 % |
| P15 | 95,2 GT SD3 | | 4.8 GT S1 | gering | 72 % |
| P16 | 90,9 GT SD3 | | 9.1 GT S1 | gering | 73 % |
| P17 | 100 GT SD4 | | ohne | gering | 70 % |
| P18 | 95,2 GT SD4 | | 4.8 GT S1 | gering | 67 % |
| P19 | 95.2 GT SD5 | | 4.8 GT S1 | gering | 77 % |
| P20 | 90.9 GT SD5 | | 9.1 GT S1 | gering | 76 % |
| P21 | 92,6 GT SD6 | | 7.4 GT S1 | gering | 72 % |
| P22 | 100 GT SD1 | | ohne | gering | 71 % |
| VP1[2)] | 80 GT D2 | 20 GT CV1 | ohne | stark,wattig | 59 % |

1) Berechnet als Festanteil der Dispersion bzw. der Copolymerisatlösung; alle Angaben (GT) sind Gewichtsteile.
2) Vergleichspulver

VI. Mineralische Baustoffzubereitungen

Zur Prüfung der anwendungstechnischen Eigenschaften der unter V erhaltenen Polymerisatpulver wurde gemäß folgendem Rezept eine Grundmischung für eine selbstverlaufende Spachtelmasse zubereitet:

| | |
|---|---|
| Zement Märker PZ 35 F | 33,60 GT[1)] |
| Tonerdeschmelzement | 10,00 GT |
| Quarzsand F34 | 33,60 GT |
| Carborex® 5[2)] | 20,00 GT |
| Entschäumer[3)] | 1,00 GT |
| Kalkhydrat | 1,17 GT |
| Natriumcarbonat | 0,30 GT |
| Weinsäure | 0,20 GT |
| Lithiumcarbonat | 0,03 GT |
| Carboxymethylcellulose[4)] | 0,10 GT |

1) Gewichtsteile
2) Calciumcarbonat mit Durchmesser d = 5 µm (Fa. Omya)
3) pulverförmiger Entschäumer: 5 - 10 Gew.-% einer Mischung aus einem ethoxilierten Fettalkohol und dem Fettsäureester eines Polyetheralkohols auf 90 bis 95 Gew.-% Calciumcarbonatpulver; d = 40 µm
4) Tylose H 300 P der Fa. Hoechst

Aus 100 Gewichtsteilen der Grundmischung, 3 Gewichtsteilen des jeweiligen Polymerisatpulvers P1 bis P 22 und 24 Gewichtsteilen Wasser wird in der bei der jeweiligen Prüfvorschrift angegebenen Weise eine Prüfmischung zubereitet. Die Ergebnisse sind in Tabelle 3 zusammengefaßt.

Tabelle 3

| Ergebnisse der anwendungstechnischen Prüfung | | | | | |
|---|---|---|---|---|---|
| Zusatz[1)] | Selbstverlauf (cm)[a)] | offene Zeit (min)[b)] | Shore-Härte C nach 4 h[c)] | Shore-Härte C nach 6 h[c)] | Haftung auf geprim. Eterplan[d)] |
| ohne | die Masse breitet nicht aus, daher keine weiteren Prüfungen möglich | | | | |
| 3.0 GT P1 | 17.1 | 40 | 58 | 70 | 3 |
| 3.0 GT P2 | 16.8 | 45 | 67 | 85 | 1-2 |
| 3.0 GT P3 | 16.2 | 40 | 48 | 72 | 3 |
| 3.0 GT P4 | 16.6 | 45 | 68 | 85 | 1-2 |
| 3.0 GT P5 | 16.2 | 30 | 56 | 79 | 2 |
| 3.0 GT P6 | 16.8 | 40 | 50 | 63 | 3 |
| 3.0 GT P7 | 17.0 | 45 | 66 | 82 | 1-2 |
| 3.0 GT P8 | 17.3 | 40 | 55 | 73 | 3 |
| 3.0 GT P9 | 16.4 | 35 | 53 | 75 | 3 |
| 3.0 GT P10 | 16.8 | 35 | 58 | 76 | 3 |
| 3.0 GT P11 | 16.1 | 30 | 47 | 76 | 2-3 |
| 3.0 GT P12 | 16.7 | 30 | 42 | 72 | 2-3 |
| 3.0 GT P13 | 16.2 | 25 | 53 | 78 | 3 |
| 3.0 GT P14 | 16.7 | 30 | 49 | 70 | 2-3 |
| 3.0 GT P15 | 16.6 | 25 | 54 | 72 | 2 |
| 3.0 GT P16 | 16.3 | 25 | 52 | 74 | 2-3 |
| 3.0 GT P17 | 16.9 | 25 | 56 | 82 | 2 |
| 3.0 GT P18 | 16.3 | 25 | 53 | 78 | 2-3 |
| 3.0 GT P19 | 16.3 | 30 | 46 | 72 | 2 |
| 3.0 GT P20 | 16.9 | 30 | 64 | 76 | 2 |
| 3.0 GT P21 | 16.4 | 25 | 71 | 82 | 1-2 |
| 3.0 GT P22 | 16.9 | 25 | 69 | 86 | 2 |

1) Gewichtsteile
a) Verlaufsverhalten
b) Zeitabhängiges Ausgleichsverhalten
c) Shore-Härte-C
d) subjektive Relativwerte

zu a)

Mit Hilfe eines elektrischen Handrührgerätes mit Knethaken (Topmix der Fa. Krupps) wurde eine gebrauchsfertige Zubereitung aus 100 g Grundmischung, 3 g Dispersionspulver und 24 g Wasser bereitet.
Eine Eterplanplatte (Faserzementplatte der Fa. Eternit) wurde mit einem Tuch gereinigt und 24 Stunden vor Versuchsbeginn mit einer wässrigen Dispersion aus 54 Gew.-% Styrol und 46 Gew.-% 2-Ethylhexylacrylat (10 gew.-%ig) beschichtet (Auftragsmenge etwa 100 g/$m^2$).
Die gebrauchsfertige Zubereitung wurde aus einer Höhe von etwa 10 cm auf die vorbehandelte, mit einem Koordinatenkreuz versehene Eterplanplatte ausgegossen. Nach etwa 2 Stunden wurde die Ausbreitung der Spachtelmassen in alle Richtungen auf dem Koordinatenkreuz abgelesen, die 4 erhaltenen Werte addiert und durch 2 dividiert. Auf diese Weise erhält man den Selbstverlauf in Zentimetern.

zu b)

Man bereitet eine gebrauchsfertige Zubereitung wie unter a) beschrieben vor.

Die fertige Mischung wurde aus einer Höhe von ca. 10 cm mittig auf die vorbehandelte Eterplanplatte (siehe a) ausgegossen (t = 0). Anschließend wurde alle 5 Minuten mit einem Metallstab die aufgebrachte Spachtelmasse, beginnend beim äußeren Rand über den Mittelpunkt hinaus, zügig und vollständig durchfahren. Dieser Vorgang wurde mindestens 8mal-wiederholt.

Nach dem Austrocknen der Masse wird um den Mittelpunkt der Masse ein Kreis mit einem Durchmesser von etwa 80 mm gezeichnet. Auf diesem Kreis werden die Punkte herausgesucht, bei denen die Spachtelmasse nach Durchziehen mit dem Metallstab wieder zusammengelaufen ist. Die "offene Zeit" entspricht dabei dem Zeitpunkt, bei dem die Spachtelmasse noch gerade zusammengelaufen ist.

Zu c)

Man bereitet, wie unter a) beschrieben, eine gebrauchsfertige Zubereitung zu und gießt diese auf eine vorbehandelte Eterplanplatte (s. o.). Nach etwa 4 Stunden wird im Abstand von 4 cm zum Mittelpunkt der Masse an drei verschiedenen Stellen die Shore-C Härte mit einem entsprechenden Prüfgerät ermittelt (dimensionsloser Wert von 1 bis 100 für die Kraft, die zum Eindrücken des kegelstumpfförmigen Prüfstempels in die Masse erforderlich ist). Diese Messung wird nach weiteren 2 Stunden wiederholt. In der Tabelle ist jeweils der Mittelwert der Einzelmessungen angegeben.

zu d)

Man bereitet eine gebrauchsfertige Zubereitung zu wie unter a) beschrieben. Diese wird auf eine vorbehandelte Eterplanplatte gegossen (siehe b). Nach 7 Tagen bei Raumtemperatur wird mittels Hammer und Meißel die aufgetragene Spachtelmasse geprüft. Die Beurteilung erfolgt nach Noten 1 bis 6. 1 bedeutet gute Haftung, 6 bedeutet schlechte Haftung.

## Patentansprüche

**1.** Verwendung von Copolymerisaten oder deren Salzen, die in einpolymerisierter Form, jeweils bezogen auf die Gesamtzahl der einpolymerisierten Monomere,

| | |
|---|---|
| 20 bis 95 Mol % | wenigstens einer ethylenisch ungesättigten Carbonsäure mit 3 bis 6 C-Atomen (Monomere A) |
| 5 bis 80 Mol % | wenigstens eines Hydroxylalkylesters einer ethylenisch ungesättigten Carbonsäure mit 3 bis 6 C-Atomen (Monomere B) |
| bis zu 10 Mol % | weitere Monomere C |

enthalten, als Hilfsmittel bei der Trocknung wässriger Polymerisatdispersionen.

**2.** Verwendung nach Anspruch 1, wobei das zahlenmittlere Molekulargewicht $M_n$ der Copolymerisate im Bereich von 5.000 bis 15.000 Dalton liegt.

**3.** Verfahren zur Herstellung pulverförmiger Polymerisate durch Trocknung wässriger Polymerisatdispersionen in Anwesenheit von Trocknungshilfsmitteln, **dadurch gekennzeichnet, daß** man als Trocknungshilfsmittel wenigstens ein Copolymerisat nach einem der vorhergehenden Ansprüche verwendet.

**4.** Verfahren nach Anspruch 3, **dadurch gekennzeichnet, daß** die zu trocknende Polymerisatdispersion eine Glasübergangstemperatur $T_G$ unterhalb 65 °C aufweist.

**5.** Verfahren nach einem der Ansprüche 3 oder 4, **dadurch gekennzeichnet, daß** man 1 bis 40 Gew.-% des Trocknungshilfsmittels, bezogen auf das zu trocknende Polymerisat, zu der wässrigen Polymerisatdispersion gibt und diese Zubereitung trocknet.

**6.** Verfahren nach einem der Ansprüche 3 bis 5, **dadurch gekennzeichnet, daß** das Polymerisat der zu trocknenden Polymerisatdispersion aufgebaut ist aus

a) 80 bis 100 Gew.-% wenigstens eines Monomers a, das ausgewählt ist unter $C_2$-$C_6$-Olefinen, vinylaromatischen Verbindungen; Estern aus ethylenisch ungesättigten $C_3$-$C_6$-Monocarbonsäuren oder $C_4$-$C_8$-Dicarbonsäuren und $C_1$-$C_{12}$-Alkanolen oder $C_5$-$C_{10}$-Cycloalkanolen; Vinyl- oder (Meth)allylestern aliphatischer $C_1$-$C_{20}$-Carbonsäuren; konjugierten Dienen; und

b) 0 bis 20 Gew.-% wenigstens eines sonstigen Monomers b, das wenigstens eine ethylenisch ungesättigte Gruppe aufweist.

**7.** Verfahren nach Anspruch 6, **dadurch gekennzeichnet, daß** man eine Polymerisatdispersion trocknet, die durch radikalische, wässrige Emulsionspolymerisation der Monomere a und gegebenenfalls b in Gegenwart wenigstens eines Copolymerisats aus einem der Ansprüche 1 bis 3 erhältlich ist.

**8.** Verfahren nach Anspruch 7, **dadurch gekennzeichnet, daß** das Copolymerisat in einer ersten Stufe durch radikalische Polymerisation der Monomere A, B und gegebenenfalls C hergestellt wird und anschließend in einer zweiten Stufe die Monomere a und gegebenenfalls b polymerisiert werden.

**9.** Polymerisatpulver, erhältlich durch ein Verfahren gemäß einem der Ansprüche 3 bis 8.

**10.** Verwendung der Polymerisatpulver nach Anspruch 9 als Bindemittel in Anstrichmassen, Lacken, Klebstoffen, Beschichtungsmassen und Kunstharzputzen sowie als Modifikatoren in mineralischen Baustoffen.

**11.** Mineralische Baustoffe in Form einer Trockenzubereitung, enthaltend

| | |
|---|---|
| 20 bis 60 Gew.-% | wenigstens ein mineralisches Bindemittel |
| 0,1 bis 20 Gew.-% | Polymerisatpulver Anspruch 9, |
| bis zu 25 Gew.-% | übliche Hilfsmittel, und |
| als Restmenge | Zuschläge wie Sand, Füllstoffe, Pigmente, natürliche Fasern und/oder synthetische Fasern. |

**12.** Wässrige Polymerisatdispersion, erhältlich durch radikalische wäßrige Emulsionspolymerisation nach einem der Ansprüche 7 oder 8.

**13.** Verwendung der wässrigen Polymerisatdispersion nach Anspruch 12 als Additiv in mineralischen Baustoffen.

**14.** Verwendung der Copolymerisate wie in einem der Ansprüche 1 bis 3 definiert als Schutzkolloide bei der radikalischen, wässrigen Emulsionspolymerisation ethylenisch ungesättigter Monomere.

## Claims

**1.** The use of a copolymer or salt thereof which in copolymerized form comprises, based in each case on the overall number of copolymerized monomers,

| | |
|---|---|
| from 20 to 95 mol% | of at least one ethylenically unsaturated carboxylic acid having 3 to 6 C atoms (monomers A) |
| from 5 to 80 mol% | of at least one hydroxyalkyl ester of an ethylenically unsaturated carboxylic acid having 3 to 6 C atoms (monomers B) |
| up to 10 mol% | of further monomers C |

as an assistant in the drying of aqueous polymer dispersions.

**2.** The use as claimed in claim 1, where the number-average molecular weight $M_n$ of the copolymer is in the range from 5000 to 15,000 daltons.

**3.** A process for preparing pulverulent polymers by drying aqueous polymer dispersions in the presence of drying assistants, wherein at least one copolymer as claimed in any of the preceding claims is used as drying assistant.

**4.** A process as claimed in claim 3, wherein the polymer dispersion to be dried has a glass transition temperature $T_G$ of below 65°C.

5. A process as claimed in either of claims 3 and 4, wherein from 1 to 40% by weight of the drying assistant, based on the polymer to be dried, is added to the aqueous polymer dispersion, and this preparation is dried.

6. A process as claimed in any of claims 3 to 5, wherein the polymer of the polymer dispersion that is to be dried is composed of

a) from 80 to 100% by weight of at least one monomer a selected from $C_2$-$C_6$ olefins, vinylaromatic compounds; esters of ethylenically unsaturated $C_3$-$C_6$ monocarboxylic acids or $C_4$-$C_8$ dicarboxylic acids and $C_1$-$C_{12}$-alkanols or $C_5$-$C_{10}$-cycloalkanols; vinyl esters or (meth)allyl esters of aliphatic $C_1$-$C_{20}$ carboyxlic acids; conjugated dienes; and

b) from 0 to 20% by weight of at least one other monomer, b, which has at least one ethylenically unsaturated group.

7. A process as claimed in claim 6, wherein a polymer dispersion is dried which is obtainable by free-radical aqueous emulsion polymerization of the monomers a, and, if used, b in the presence of at least one copolymer from any of claims 1 to 3.

8. A process as claimed in claim 7, wherein the copolymer is in a first stage prepared by free-radical polymerization of the monomers A, B and, if used, C and then in a second stage the monomers a and, if used, b are polymerized.

9. A polymer powder obtainable by a process as claimed in any of claims 3 to 8.

10. The use of a polymer powder as claimed in claim 9 as a binder in paints, varnishes, adhesives, coating compositions and synthetic-resin renders and as a modifier in mineral building materials.

11. A mineral building material in the form of a dry preparation comprising

| | |
|---|---|
| from 20 to 60% by weight | of at least one mineral binder, |
| from 0.1 to 20% by weight | of polymer powder as claimed in claim 9, |
| up to 25% by weight | of customary auxiliaries, and |
| as the remaining amount | aggregates such as sand, fillers, pigments, natural fibers and/or synthetic fibers. |

12. An aqueous polymer dispersion, obtainable by free-radical aqueous emulsion polymerization as claimed in either of claims 7 and 8.

13. The use of an aqueous polymer dispersion as claimed in claim 12 as an additive in mineral building materials.

14. The use of a copolymer as defined in any of claims 1 to 3 as a protective colloid in connection with the free-radical aqueous emulsion polymerization of ethylenically unsaturated monomers.

**Revendications**

1. Utilisation de copolymères ou de leurs sels, qui contiennent, sous forme polymérisée, à chaque fois par rapport au nombre total des monomères polymérisés,

| | |
|---|---|
| 20% à 95% en moles | d'au moins un acide carboxylique à insaturation éthylénique possédant 3 à 6 atomes de C (monomères A) |
| 5% à 80% en moles | d'au moins un ester hydroxyalkylique d'un acide carboxylique à insaturation éthylénique possédant 3 à 6 atomes de C (monomères B) |
| jusqu'à 10% en moles | d'autres monomères C, |

en tant qu'adjuvant pour le séchage de dispersions aqueuses de polymère.

2. Utilisation selon la revendication 1, dans laquelle la masse moléculaire moyenne en nombre $M_n$ des copolymères va de 5 000 à 15 000 Dalton.

**3.** Procédé de préparation de polymères sous forme de poudre au moyen du séchage de dispersions aqueuses de polymère en présence d'adjuvants de séchage, **caractérisé en ce que** l'on utilise, en tant qu'adjuvant de séchage, au moins un copolymère selon l'une quelconque des revendications précédentes.

**4.** Procédé selon la revendication 3, **caractérisé en ce que** la dispersion de polymère à sécher présente une température de transition vitreuse $T_g$ inférieure à 65°C.

**5.** Procédé selon l'une quelconque des revendications 3 ou 4, **caractérisé en ce que** l'on ajoute 1% à 40% en poids de l'adjuvant de séchage, par rapport au polymère à sécher, à la dispersion aqueuse de polymère, et que l'on sèche cette préparation.

**6.** Procédé selon l'une quelconque des revendications 3 à 5, **caractérisé en ce que** le polymère de la dispersion aqueuse de polymère est formé de

a) 80% à 100% en poids d'au moins un monomère a, qui est choisi parmi les oléfines en $C_2$ à $C_6$, les composés vinylaromatiques ; les esters d'acides monocarboxyliques en $C_3$ à $C_6$ à insaturation éthylénique ou d'acides dicarboxyliques en $C_4$ à $C_8$ et d'alcanols en $C_1$ à $C_{12}$ ou de cycloalcanols en $C_5$ à $C_{10}$ ; les esters vinyliques ou (méth)allyliques d'acides carboxyliques aliphatiques en $C_1$ à $C_{20}$ ; les diènes conjugués ; et
b) 0% à 20% en poids d'au moins un autre monomère b, qui présente au moins un groupe à insaturation éthylénique.

**7.** Procédé selon la revendication 6, **caractérisé en ce que** l'on sèche une dispersion de polymère, que l'on peut obtenir au moyen d'une polymérisation radicalaire en émulsion aqueuse des monomères a et éventuellement b, en présence d'au moins un copolymère selon l'une quelconque des revendications 1 à 3.

**8.** Procédé selon la revendication 7, **caractérisé en ce que** l'on prépare le copolymère, dans une première étape, au moyen d'une polymérisation radicalaire des monomères A, B et éventuellement C puis que l'on polymérise, dans une seconde étape, les monomères a et éventuellement b.

**9.** Poudre de polymère, pouvant être obtenue au moyen d'un procédé selon l'une quelconque des revendications 3 à 8.

**10.** Utilisation de la poudre de polymère selon la revendication 9 en tant que liant dans les masses de peinture, les vernis, les colles, les matériaux de revêtement et les enduits à base de résine synthétique ainsi qu'en tant qu'agents modificateurs dans les matériaux de construction minéraux.

**11.** Matériaux de construction minéraux sous forme de préparation sèche, contenant

| | |
|---|---|
| 2% à 60% en poids | d'au moins un liant minéral, |
| 0,1% à 20% en poids | de poudre de polymère selon la revendication 9, |
| jusqu'à 25% en poids | d'adjuvants habituels, et |
| le complément | d'additifs tels que le sable, les charges, les pigments, les fibres naturelles et/ou les fibres synthétiques. |

**12.** Dispersion aqueuse de polymère, pouvant être obtenue au moyen d'une polymérisation radicalaire en émulsion aqueuse selon l'une quelconque des revendications 7 ou 8.

**13.** Utilisation de la dispersion aqueuse de polymère selon la revendication 12 en tant qu'additif dans les matériaux de construction minéraux.

**14.** Utilisation des copolymères tels que définis dans l'une quelconque des revendications 1 à 3 en tant que colloïdes protecteurs dans la polymérisation radicalaire en émulsion aqueuse de monomères à insaturation éthylénique.